# EUROPEAN PATENT APPLICATION

(11) **EP 2 123 730 A1**
(43) Date of publication of application: **25.11.2009**
(21) Application number: 08721107.4
(22) Date of filing: 29.02.2008
(51) Int. Cl.: C09K 5/06, F28D 20/02

(54) **LATENT HEAT STORAGE SUBSTANCE, INCLUSION HYDRATE OR SLURRY THEREOF, METHOD FOR PRODUCING INCLUSION HYDRATE OR SLURRY THEREOF, AND LATENT HEAT STORAGE AGENT**

(30) Priority: 02.03.2007 JP 2007053343; 02.03.2007 JP 2007053375
(71) Applicant: JFE Engineering Corporation, Chiyoda-ku Tokyo 100-0004 (JP)
(72) Inventor: TOMURA, Keiji, Tokyo 100-0004, (JP); TAKAO, Shingo, Tokyo 100-0004, (JP); KITAGAWA, Takao, Tokyo 100-0004, (JP)
(74) Representative: Zech, Stefan Markus
(86) International application number: PCT/JP2008/053687
(87) International publication number: WO 2008/108308

(57) **Abstract**

A latent heat storage material including a clathrate hydrate including, as its guest compound or guest compounds, a salt containing at least one of primary phosphate ion (H₂PO₄⁻), secondary phosphate ion (HPO₄²⁻) and tertiary phosphate ion (PO₄³⁻), and a pH regulator.

## Description

### Technical Field

The present invention relates to a clathrate hydrate or its slurry having low corrosivity and a latent heat storing capacity, and particularly to a clathrate hydrate including, as its guest compound or guest compounds, at least one salt containing at least one of primary phosphate ion (H₂PO₄⁻), secondary phosphate ion (HPO₄²⁻) and tertiary phosphate ion (PO₄³⁻) (hereinafter sometimes collectively called "phosphoric acid type clathrate hydrate"), its slurry and the technologies concerned.

Also, the present invention relates to a clathrate hydrate having low metal corrosivity and cost efficiency, particularly, to a clathrate hydrate including, as its guest compound or guest compounds, at least one quaternary ammonium salt containing a phosphate ion as the anion and to technologies relating to the clathrate hydrate (for example, an aqueous solution producing the clathrate hydrate, a slurry of the clathrate hydrate, a method for producing the slurry and a heat storage agent containing the clathrate hydrate).

In the present invention, the meaning and interpretation of the terms given below are as follows unless otherwise noted.
(1) The term "latent heat storage material" means a material having the property of storing, accumulating or reserving latent heat or thermal energy corresponding or equivalent to the same, and the term "latent heat storage medium" means a material capable of mediating or conveying latent heat stored, accumulated or reserved in these latent heat storage materials.
   The "latent heat storage material" may be a clathrate hydrate itself which is a material having the property of storing, accumulating or reserving latent heat or thermal energy corresponding or equivalent to the same, a material having a structure in which the clathrate hydrate is contained as an essential component and other composition(s) is(are) supplemented or added or a material having a structure in which the clathrate hydrate is dispersed, encapsulated or suspended in other material(s).
   No particular limitation is imposed on the properties of the "latent heat storage material", and examples of the shape of the latent heat storage material include a solid form, liquid form, gel form, slurry form, and microcapsule form (state of the material packed within a microcapsule).
   No particular limitation is imposed on an aspect of the use of the "latent heat storage material", and latent heat storing media subjected to thermal utilization at a fixed position and also, latent heat storage media subjected to thermal utilization at the destination owing to the association of driving force or natural convection.
(2) The "clathrate hydrate" includes semi-clathrate hydrates.
(3) The "clathrate hydrate" may be abbreviated to "hydrate".
(4) The "guest compound" and the "guest molecule" may be referred to as "guest".
(5) The term "slurry" means such a state that solid particles are dispersed or suspended in a liquid or a material in such a state. Though there is the case where a surfactant is added or mechanical stirring is carried out to put the solid particles, which tend to be settled, sedimented or precipitated, into a floated state, any material may be called "slurry" as long as the solid particles are dispersed or suspended in the liquid. Any material in which the solid particles are dispersed or suspended unevenly is called "slurry" as long as the solid particles are dispersed or suspended in the liquid.
(6) An aqueous solution having the property of producing the clathrate hydrate may be called "raw aqueous solution". Even if a minute material other than the guest compound of the clathrate hydrate is added or contained, or even if the clathrate hydrate is dispersed or suspended, any aqueous solution corresponds to "raw aqueous solution" as long as it has the property of producing the clathrate hydrate.
(7) The term "hydrate formation temperature" means the equilibrium temperature at which the clathrate hydrate is to be formed or generated when the raw aqueous solution is cooled. Even in the case where the temperature at which the clathrate hydrate is formed or generated is varied depending on the concentration of the guest compound of the raw aqueous solution, this temperature is called "hydrate formation temperature". It is to be noted that there is the case where the "hydrate formation temperature" is called "melting point" for the sake of convenience.
(8) The term "clathrate hydrate including, as its guest compound or guest compounds, at least one quaternary ammonium salt" may be abbreviated to "clathrate hydrate of quaternary ammonium salt" or "quaternary ammonium salt hydrate".
(9) The term "cold heat" means thermal energy ensuring a temperature higher than 0°C and lower than 30°C or thermal energy corresponding to that temperature. The term "cold heat range" means a temperature higher than 0°C and lower than 30°C.
(10) The term "cold storage" means the storage, accumulation or reservation of thermal energy carried in the temperature range corresponding to the cold heat by the heat storage material such as the clathrate hydrate having the hydrate generation temperature in such a temperature range c.
(11) The term "heat storing property" means the property of being able to store, accumulate or reserve thermal energy. It is to be noted that the property of being able to store, accumulate or reserve thermal energy corresponding or equivalent to latent heat may be called "latent heat storing property". The property of being able to store, accumulate or reserve cold heat may be called "cold storing property".
(12) The term "heat storage agent" means an agent causing a material to havethe heat storing property regardless of the forms of, for example, a liquid, solid or slurry and also, regardless of the object and structure of storage, transportation and others and application fields of thermal energy.
   A material having cold storing property may be called "cold storage agent". Also, a material having latent heat storing property may be called "latent heat storage agent".
   The clathrate hydrate having heat storing property may be each structural component of the "heat storage agent", "latent heat storage agent" and "cold storage agent".
(13) The term "heat storage element" means an element or substance having the heat storing property regardless of the properties and forms of, for example, a liquid, solid or slurry and also, regardless of the object and structure of storage, transportation and others and fields of thermal energy.
   An element or substance having cold storing property may be called "cold storage element". An element or substance having latent heat storing property may be called "latent heat storage element". All of the storage agent, latent heat storage agent and cold storage agent may be each structural component of the "heat storage element", "latent heat storage element" and "cold storage element".
(14) The term "harmonic melting point" means a temperature at which the concentration of the guest compound in the raw aqueous solution is equal to the concentration of the guest compound in the clathrate hydrate and therefore, the composition of the liquid phase is not changed before and after the clathrate hydrate is produced, when the clathrate hydrate is produced from the liquid phase of the raw aqueous solution.

In a phase diagram in which the ordinate is the hydrate formation temperature and the abscissa is the concentration of the guest compound in the liquid phase of the raw aqueous solution, the maximum point is the "harmonic melting point". Also, the concentration of the guest compound in the raw aqueous solution at which the harmonic melting point is given is called "harmonic melting point concentration". When the clathrate hydrate is produced from the raw aqueous solution having a concentration less than the harmonic melting point concentration, the concentration of the guest compound in the raw aqueous solution is dropped and the hydrate formation temperature with respect to the corresponding concentration is dropped.

### Background Art

The clathrate hydrate includes a gas clathrate hydrate using gas as its guest and a non-gas clathrate hydrate using a non-gas material as its guest. A clathrate hydrate typified by the non-gas clathrate hydrate is a typical latent heat storage material which stores or accumulates latent heat when it is produced (Non-patent Document 1). Therefore, studies are being made as to the utilization of these non-gas clathrate hydrates as the latent heat storage medium in the fields of thermal utilization such as heat transportation and heat reservation (Patent Documents 1 and 2).

Typical examples of the non-gas clathrate hydrate include those including, as the guest compound, quaternary ammonium salts such as tetra-n-butylammonium salt and tetra-iso-amylammonium salt, tetra-iso-butylphosphonium salt and tri-iso-amylsulfonium salt. Typical examples of the anion forming these salts include ions such as halogens such as fluorine (F), chlorine (Cl) and bromine (Br), acetic acid (CH₃CO₂), bicarbonate (HCO₂), chromic acid (CrO₄), tungstic acid (WO₄), oxalic acid (C₂O₄) and phosphoric acid (HPO₄) (Patent Documents 3 and 4).

Many a quaternary ammonium salt hydrate is produced at normal pressure, has a large latent heat when a hydrate is produced and hence stores relatively large heat energy and also, is easily handlable because it is not flammable unlike paraffin.

Also, many a quaternary ammonium salt hydrate has a higher harmonic melting point or hydrate formation temperature than the melting point of ice (0°C at normal pressure) and therefore, the temperature of a cooling medium used when a heat storage agent is cooled to produce a hydrate may be higher, leading to a higher coefficient of performance (COP) of a refrigerating machine used to cool the cooling medium, which offers such an advantage as energy saving.

Moreover, quaternary ammonium salt hydrates are easily dispersed or suspended in water or an aqueous solution, have generally a uniformly dispersed state, are reduced in coagulating ability, give rise to insignificant phase separation and are significantly reduced in fluid resistance. If each of these quaternary ammonium salt hydrates is produced in the form of a slurry (Patent Documents 5 and 6), a heat storage element or a heat storage agent and a thermal transport medium may be formed in the form of a slurry and handled as a slurry (Patent Documents 1 and 7).

It may be therefore said that the quaternary ammonium salt hydrate is a promising one as a heat storage element, a heat storage agent and a structural element or structural component of them. Specific examples of the quaternary ammonium salt hydrate include a clathrate hydrate including a tetra-n-butylammonium salt or tri-n-butyl-n-pentylammonium salt as the guest compound (Patent Documents 8 and 9).
Non-patent Reference 1: KAWASAKI Naritake and one other, "Application of a gas hydrate to a cold heat storage element", Chemical Engineering, Kagaku Kogyo, August 1, 1982, Vol. 27, No. 8, p.603, Table 1
Patent Document 1: Jpn. Pat. Appln. KOKAI Publication No. 10-259978
Patent Document 2: Jpn. Pat. Appln. KOKAI Publication No. 11-351775
Patent Document 3: Jpn. Pat. Appln. KOKAI Publication No. 2005-126728
Patent Document 4: Jpn. Pat. Appln. KOKOKU Publication No. 57-35224
Patent Document 5: Jpn. Pat. Appln. KOKAI Publication No. 2004-3718
Patent Document 6: Jpn. Pat. Appln. KOKAI Publication No. 2002-263470
Patent Document 7: Jpn. Pat. Appln. KOKAI Publication No. 2001-301884
Patent Document 8: Jpn. Pat. Appln. KOKAI Publication No. 2001-280875
Patent Document 9: WO 2006/132322 A1
Patent reference 10: Jpn. Pat. Appln. KOKAI Publication No. 2004-331935

### Disclosure of Invention

Incidentally, when a clathrate hydrate is utilized as a latent heat storage material, or a clathrate hydrate of quaternary ammonium salt is used as a heat storage agent, the chance of the clathrate hydrate being in contact with metal materials is increased whether the clathrate hydrate is used in a slurry state or not, posing the problem that the anion constituting the guest compound promotes the corrosion of the metal materials.

In order to solve this problem, studies have been made as to the addition of a corrosion inhibitor (Patent Document 10).

However, the corrosion inhibitor is formulated in a limited range of the condition in which its effect is produced and also, in a limited range where the property desired for the latent heat storage medium is maintained. Also, the addition of the corrosion inhibitor complicates the composition of the latent heat storage medium and hence the maintenance and control of the medium, and is an underlying cause of an increase in costs of the maintenance and control. Therefore, it has been desired to furnish a more fundamental solution without relying on a corrosion inhibitor as much as possible, and specifically, the advent of a clathrate hydrate having low corrosivity has been desired.

Also, a quaternary ammonium salt is usually expensive. It is economically more desirable that the amount of the quaternary ammonium salt used to attain the same heat storing density is smaller, when a clathrate hydrate of the quaternary ammonium salt is used to constitute a cold storage element. It is accordingly desired to develop technologies which can reduce the amount of the quaternary ammonium salt to obtain the same heat storing density.

The present invention has been made in view of the above background and it is an object of the present invention to provide a clathrate hydrate improved significantly in the problem of metal corrosion and having a latent heat storing capacity and its slurry, a latent heat storage material containing the clathrate hydrate and its slurry, an aqueous solution capable of producing the clathrate hydrate and its slurry, a method of adjusting the melting point of the clathrate hydrate, a method for increasing the latent heat of a slurry of the clathrate hydrate and a method for producing each of the clathrate hydrate and its slurry.

The inventors of the present invention avoids the adoption of a guest compound containing a halogen ion which generally causes high corrosivity, and have made studies concerning a clathrate hydrate including, as the guest compound or guest compounds, a salt of a primary phosphate ion (H₂PO₄⁻), a secondary phosphate ion (HPO₄²⁻) or a tertiary phosphate ion (PO₄³⁻) and a cation or cations.

The inventors of the present invention, as a result of the above studies, have found that a clathrate hydrate including, as its guest compound or guest compounds, at least one salt containing at least one of primary phosphate ion (H₂PO₄⁻), secondary phosphate ion (HPO₄²⁻) or tertiary phosphate ion (PO₄³⁻) is easily dispersed or suspended in water to exhibit the properties of a slurry and that the clathrate hydrate and its slurry each have a latent heat storing capacity and also, exhibit low metal corrosivity. Then, because studies have not been made in detail as to a clathrate hydrate including, as the guest compound, a salt containing phosphate ion so far, the inventors of the present invention have made earnest studies and as a result, found that the creation or process of the creation of the clathrate hydrate, latent heat storing characteristics thereof (particularly the melting point of the produced clathrate hydrate) and metal corrosivity thereof are significantly dependent on pH.

The above object is attained based on these findings by a latent heat storage material according to a first embodiment of the present invention, the latent heat storage material comprisinga clathrate hydrate including, as the guest compound or guest compounds, at least one salt containing at least one of primary phosphate ion (H₂PO₄⁻), secondary phosphate ion (HPO₄²⁻) and tertiary phosphate ion (PO₄³⁻), and a pH regulator.

An aqueous solution according to a second embodiment of the present invention is one containing the guest compound or guest compounds of a clathrate hydrate and a pH regulator, wherein the guest compound or guest compounds are at least one salt containing at least one of primary phosphate ion (H₂PO₄⁻), secondary phosphate ion (HPO₄²⁻) and tertiary phosphate ion (PO₄³⁻).

A clathrate hydrate according to a third embodiment of the present invention is produced by cooling an aqueous solution prepared by dissolving at least one salt containing at least one of primary phosphate ion (H₂PO₄⁻), secondary phosphate ion (HPO₄²⁻) and tertiary phosphate ion (PO₄³⁻) and a pH regulator in water, the produced clathrate hydrate storing latent heat.

A slurry of a clathrate hydrate according to a fourth embodiment of the present invention comprises the clathrate hydrate according to the third embodiment dispersed or suspended in an aqueous solvent.

A latent heat storage material according to a fifth embodiment of the present invention comprises at least one of a clathrate hydrate including, as the guest compound, a compound containing a primary phosphate ion (H₂PO₄⁻) as its anion, a clathrate hydrate including, as the guest compound, a compound containing a secondary phosphate ion (HPO₄²⁻) as its anion and a clathrate hydrate including, as the guest compound, a compound containing a tertiary phosphate ion (PO₄³⁻) as its anion, and an alkaline material.

A latent heat storage material according to a sixth embodiment of the present invention is the latent heat storage material according to the fifth embodiment placed in a container or vessel.

An aqueous solution according to a seventh embodiment of the present invention comprises a guest compound or guest compounds of a clathrate hydrate and exhibits an alkaline state, wherein the guest compound or guest compounds are at least one salt consisting of at least one of primary phosphate ion (H₂PO₄⁻), secondary phosphate ion (HPO₄²⁻) and tertiary phosphate ion (PO₄³⁻), and quaternary ammonium ion.

A hydrate according to an eighth embodiment of the present invention is produced by cooling the aqueous solution according to the seventh embodiment, the produced clathrate hydrate storing the latent heat and also having a corrosion inhibitive effect.

A hydrate slurry according to a ninth embodiment of the present invention comprises the clathrarte hydrate according to the eighth embodiment dispersed or suspended in the aqueous solution.

A latent heat storage material according to a tenth embodiment of the present invention contains the hydrate according to the eighth embodiment, or the hydrate slurry according to the ninth embodiment and its heat storinge performance or heat storing capacity can be regulated by the pH of the aqueous solution.

A method of adjusting the melting point of the clathrate hydrate according to an eleventh embodiment of the present invention is a method for adjusting a melting point of a clathrate hydrate including, as its guest compound or guest compounds, at least one salt containing at least one of primary phosphate ion (H₂PO₄⁻), secondary phosphate ion (HPO₄²⁻) and tertiary phosphate ion (PO₄³⁻), the method comprising any one of (1) to (4):
(1) adjusting a pH of an aqueous solution prepared by dissolving the salt and then, cooling the aqueous solution;
(2) cooling an aqueous solution prepared by dissolving the salt and then, adjusting the pH of the aqueous solution;
(3) adjusting a pH of an aqueous solution prepared by dissolving the salt, and then, by cooling the aqueous solution, further adjusting the pH of the aqueous solution; and
(4) adjusting a pH of an aqueous solution prepared by dissolving the salt during cooling the aqueous solution.

A method for increasing the stored latent heat quantity of a slurry of the clathrate hydrate according to a twelfth embodiment of the present invention is a method for increasing stored latent heat quantity of a slurry of a clathrate hydrate including, as its guest compound, a salt containing primary phosphate ion (H₂PO₄⁻), the method comprising any one of (1) to (4):
(1) increasing a pH of an aqueous solution prepared by dissolving the salt and then, cooling the aqueous solution;
(2) cooling an aqueous solution prepared by dissolving the salt and then, increasing the pH of the aqueous solution;
(3) increasing a pH of an aqueous solution prepared by dissolving the salt, and then, by cooling the aqueous solution, further adjusting the pH of the aqueous solution; and
(4) increasing a pH of an aqueous solution prepared by dissolving the salt during cooling the aqueous solution.

A method for producing the clathrate hydrate or its slurry according to a thirteenth embodiment of the present invention is a method for producing a clathrate hydrate including, as its guest compound, a salt containing primary phosphate ion (H₂PO₄⁻) or its slurry, the method comprising any one of (1) to (4):
(1) decreasing a pH of an aqueous solution of at least one salt containing at least one of secondary phosphate ion (HPO₄²⁻) and tertiary phosphate ion (PO₄³⁻) and then, decreasing a temperature of the aqueous solution to a temperature lower than a melting point of the clathrate hydrate;
(2) decreasing a temperature of an aqueous solution of at least one salt containing at least one of secondary phosphate ion (HPO₄²⁻) and tertiary phosphate ion (PO₄³⁻) to a temperature lower than a melting point of the clathrate hydrate and then, decreasing the pH of the aqueous solution;
(3) decreasing a pH of an aqueous solution of at least one salt containing at least one of secondary phosphate ion (HPO₄²⁻) and tertiary phosphate ion (PO₄³⁻), then, decreasing a temperature of the aqueous solution to a temperature lower than a melting point of the clathrate hydrate and then, decreasing the pH of the aqueous solution; and
(4) adjusting a pH of an aqueous solution of at least one salt containing at least one of secondary phosphate ion (HPO₄²⁻) and tertiary phosphate ion (PO₄³⁻) during cooling the aqueous solution to a temperature lower than a melting point of the clathrate hydrate.

A method for producing the clathrate hydrate or its slurry according to a fourteenth embodiment of the present invention is a method for producing a clathrate hydrate including, as its guest compound, a salt containing secondary phosphate ion (HPO₄²⁻) or its slurry, the method comprising any one of (1) to (4):
(1) decreasing apH of an aqueous solution of a salt containing tertiary phosphate ion (PO₄³⁻) and then, decreasing a temperature of the aqueous solution to a temperature lower than a melting point of the clathrate hydrate;
(2) decreasing a temperature of an aqueous solution of a salt containing tertiary phosphate ion (PO₄³⁻) to a temperature lower than a melting point of the clathrate hydrate and then, decreasing a pH of the aqueous solution;
(3) decreasing a pH of an aqueous solution of a salt containing tertiary phosphate ion (PO₄³⁻), then, decreasing a temperature of the aqueous solution to a temperature lower than a melting point of the clathrate hydrate and then, further decreasing the pH of the aqueous solution; and
(4) decreasing a pH of an aqueous solution of a salt containing tertiary phosphate ion (PO₄³⁻) during cooling the aqueous solution to a temperature lower than a melting point of the clathrate hydrate.

A method for producing the clathrate hydrate or its slurry according to a fifteenth embodiment of the present invention is a method for producing a clathrate hydrate including, as its guest compound, a salt containing secondary phosphate ion (HPO₄²⁻) or its slurry, the method comprising any one of (1) to (4):
(1) increasing apH of an aqueous solution of a salt containing primary phosphate ion (H₂PO₄⁻) and then, decreasing a temperature of the aqueous solution to a temperature lower than a melting point of the clathrate hydrate;
(2) decreasing a temperature of an aqueous solution of a salt containing primary phosphate ion (H₂PO₄⁻) to a temperature lower than a melting point of the clathrate hydrate and then, increasing the pH of the aqueous solution;
(3) increasing a pH of an aqueous solution of a salt containing primary phosphate ion (H₂PO₄⁻), then, decreasing a temperature of the aqueous solution to a temperature lower than a melting point of the clathrate hydrate and then, further increasing the pH of the aqueous solution; and
(4) increasing a pH of an aqueous solution of a salt containing primary phosphate ion (H₂PO₄³⁻) during cooling the aqueous solution to a temperature lower than a melting point of the clathrate hydrate.

A method for producing the clathrate hydrate or its slurry according to a sixteenth embodiment of the present invention is a method for producing a clathrate hydrate including, as its guest compound, a salt containing tertiary phosphate ion (PO₄³⁻) or its slurry, the method comprising any one of (1) to (4):
(1) increasing apH of an aqueous solution of at least one salt containing secondary phosphate ion (HPO₄²⁻) and primary phosphate ion (H₂PO₄⁻) and then, decreasing a temperature of the aqueous solution to a temperature lower than a melting point of the clathrate hydrate;
(2) decreasing the temperature of an aqueous solution of at least one salt containing at least one of secondary phosphate ion (HPO₄²⁻) and primary phosphate ion (H₂PO₄⁻) to a temperature lower than a melting point of the clathrate hydrate and then, increasing a pH of the aqueous solution;
(3) increasing a pH of an aqueous solution of at least one salt containing at least one of secondary phosphate ion (HPO₄²⁻) and primary phosphate ion (H₂PO₄⁻), then, decreasing a temperature of the aqueous solution to a temperature lower than a melting point of the clathrate hydrate and then, further increasing the pH of the aqueous solution; and
(4) increasing a pH of an aqueous solution of at least one salt containing at least one of secondary phosphate ion (HPO₄²⁻) and primary phosphate ion (H₂PO₄³⁻) during cooling the aqueous solution to a temperature lower than a melting point of the clathrate hydrate.

A latent heat storage material according to a seventeenth embodiment of the present invention comprises a clathrate hydrate including, as its guest compound or guest compounds, at least one salt containing at least one of primary phosphate ion (H₂PO₄⁻), secondary phosphate ion (HPO₄²⁻) and tertiary phosphate ion (PO₄³⁻) and tetra-n-butylammonium, and a pH regulator.

A clathrate hydrate according to an eighteenth embodiment is produced by cooling an aqueous solution prepared by dissolving at least one salt containing at least one of primary phosphate ion (H₂PO₄⁻), secondary phosphate ion (HPO₄²⁻) and tertiary phosphate ion (PO₄³⁻) and tetra-n-butylammonium, and a pH regulator, the produced clathrate hydrate storing latent heat.

A slurry of the clathrate hydrate according to a nineteenth embodiment of the present invention comprises the clathrate hydrate according to the eighteenth embodiment dispersed or suspended in an aqueous solvent.

Also, the inventors of the present invention have found that the heat storing densities of a clathrate hydrate of quaternary ammonium salt containing, as the anion, phosphate ion such as primary phosphate ion (H₂PO₄⁻), secondary phosphate ion (HPO₄²⁻) or tertiary phosphate ion (PO₄³⁻), and its slurry are outstandingly improved by adding an inorganic phosphate or phosphoric acid. This implies that the amount of the quaternary ammonium salt required to obtain a clathrate hydrate having the same heat storing density and its slurry can be relatively reduced by adding the inorganic phosphate or phosphoric acid.

Accordingly, an aqueous solution according to a twentieth embodiment of the present invention for attaining the above object based on the above findings has the property of producing a clathrate hydrate including, as the guest compound or guest compounds, at least one quaternary ammonium salt in which the anion is a phosphate ion, the aqueous solution comprising the quaternary ammonium salt and an inorganic phosphate or phosphoric acid.

An aqueous solution according to a twenty-first embodiment of the present invention is obtained by adding a pH regulator or pH modifier to the aqueous solution according to the twentieth embodiment.

A clathrate hydrate according to a twenty-second embodiment of the present invention is produced by cooling the aqueous solution according to the twentieth or twenty-first embodiment, the aqueous solution storing thermal energy corresponding or equivalent to the latent heat when the clathrate hydrate is formed or generated.

A clathrate hydrate slurry according to a twenty-third embodiment of the present invention comprises the clathrate hydrate according to the twenty-second embodiment dispersed or suspended in an aqueous solvent.

A clathrate hydrate slurry according to a twenty-fourth embodiment of the present invention comprises the clathrate hydrate according to the twentieth or twenty-first embodiment dispersed or suspended in the aqueous solution.

A method for producing a slurry of a clathrate hydrate according to a twenty-fifth embodiment of the present invention includes cooling the aqueous solution according to the twentieth embodiment after adjusting a pH of the aqueous solution.

A latent heat storage agent according to a twenty-sixth embodiment of the present invention contains the clathrate hydrate according to the twenty-second embodiment.

A latent heat storage agent according to a twenty-seventh embodiment of the present invention comprises a clathrate hydrate including, as its guest compound, a quaternary ammonium salt in which the anion is a phosphate ion, and an inorganic phosphate or phosphoric acid.

A latent heat storage agent according to a twenty-eighth embodiment of the present invention is obtained by adding a pH regulator to the latent heat storage agent according to the twenty-seventh embodiment.

A method for controlling the latent heat storing characteristics of the clathrate hydrate according to a twenty-ninth embodiment of the present invention or its slurry includes cooling the aqueous solution according to the twentieth embodiment after adjusting a pH of the aqueous solution.

A method for adjusting the melting point of the clathrate hydrate according to a thirtieth embodiment includes cooling the aqueous solution according to the twentieth embodiment after adjusting a pH of the aqueous solution.

The present invention ensures that since a clathrate hydrate which has low metal corrosivity and has a latent heat storing capacity and its slurry can be obtained, the amount of a corrosion inhibitor to be formulated can be significantly reduced or the formulation of the corrosion inhibitor is not required when the clathrate hydrate or its slurry is applied, as a latent heat storage medium, in the fields of thermal utilization such as heat transfer and heat accumulation. Therefore, the clathrate hydrate or slurry is not limited in the purpose of use and range of applications as the latent heat storage medium by the condition under which the effect of the corrosion inhibitor is caused and also, the load required for maintenance and control and hence an increase in the costs required for them can be avoided or prevented.

Also, because metal corrosivity and latent heat storing capacity are set according to the pH, it is possible to easily prepare a proper clathrate hydrate or its slurry in accordance with the thermal utilization circumstance.

According to the present invention, a latent heat storage material containing the above clathrate hydrate can be attained.

Also, according to the present invention, clathrate hydrates different in metal corrosion, in latent heat storing characteristics (particularly, the melting point of a clathrate hydrate to be produced), in use or in the range of applications can be produced from the same aqueous solution by pH adjustment.

Moreover, the melting point and heat storing performance of the clathrate hydrate can be arranged by pH adjustment.

The specific effects produced by each embodiment of the present invention are as follows.

According to the first embodiment of the present invention, a latent heat storage material can be attained which contains a phosphoric acid type clathrate hydrate having low metal corrosivity and a latent heat storing capacity, and these properties of which can be adjusted or arranged by a pH regulator.

According to the second embodiment of the present invention, an aqueous solution can be obtained which can produce a phosphoric acid type clathrate hydrate having low metal corrosivity and a latent heat storing capacity wherein these characteristics can be adjusted or arranged according to the pH. In other words, if the pH is adjusted, a phosphoric acid type clathrate hydrate in accordance with the pH can be obtained from the same aqueous solution.

According to the third embodiment of the present invention, a phosphoric acid type clathrate hydrate can be obtained which has low metal corrosivity and has a latent heat storing capacity, wherein these characteristics can be adjusted or arranged in accordance with the pH.

According to the fourth embodiment of the present invention, a slurry of a phosphoric acid type clathrate hydrate can be obtained in which the phosphoric acid type clathrate hydrate is dispersed or suspended in an aqueous medium. It is needless to say that this slurry is one form of the latent heat storage material and is expected to be used for a latent heat storage medium because it has high fluidity and is easily handled.

According to the fifth embodiment of the present invention, a latent heat storage material can be attained which contains a phosphoric acid type clathrate hydrate having low metal corrosivity and a latent heat storing capacity, and these properties of which are adjusted or arranged by an alkaline material like that of the first embodiment. As will be mentioned later, the metal corrosiveness of the phosphoric acid type clathrate hydrate contained in the heat storage material is significantly reduced in an alkaline range.

According to the sixth embodiment of the present invention, a heat storage element and a heat storage vessel can be attained which are constituted by accommodating or receiving the latent heat storage material according to the fifth embodiment in a container orvessel. Because this latent heat material has low metal corrosivity, the range of selection of the material of a container or vessel is widened, making it possible to produce these container and vessel at low costs.

According to the seventh embodiment of the present invention, an aqueous alkaline solution can be obtained which can produce a phosphoric acid type clathrate hydrate having low metal corrosivity and a latent heat storing capacity wherein these characteristics are adjusted.

Then, according to the eighth embodiment of the present invention, the latent heat is accumulated immediately after the aqueous alkaline solution is cooled. A hydrate having significantly low metal corrosivity can be obtained.

According to the ninth embodiment of the present invention, a hydrate slurry (or a slurry of a hydrate) can be obtained in which the hydrate according to the eighth embodiment is dispersed or suspended in the above aqueous alkaline solution. This hydrate slurry is also one aspect of the latent heat storage material and may be expected to be used for a latent heat storage medium because it has high fluidity and is handled easily.

According to the tenth embodiment, a latent heat storage material of which the heat storing performance is improved by adjusting the pH of the aqueous solution can be attained. The latent heat storage material contains the hydrate according to the eighth embodiment or the hydrate slurry according to the ninth embodiment.

According to the eleventh embodiment of the present invention, the melting point of a phosphoric acid type clathrate hydrate produced from the aqueous solution can be adjusted or arranged by adjusting the pH of the aqueous solution before cooling, after cooling, before and after cooling, during cooling or in the process of cooling the aqueous solution according to the second embodiment of the present invention.

According to the twelfth embodiment of the present invention, the stored latent heat quantity of a slurry of a clathrate hydrate produced from the aqueous solution, which is prepared by dissolving a salt consisting of a primary phosphate ion and a cation, can be increased by increasing the pH of the prepared aqueous solution before cooling, after cooling, before and after cooling, during cooling or in the process of cooling the prepared aqueous solution. Low metal corrosivity is inherent to the slurry. Therefore, the slurry has wider applications as a latent heat storage material.

According to the thirteenth to sixteenth embodiments of the present invention, a production method can be attained in which in the process of cooling an aqueous solution obtained by dissolving the guest compound in the phosphoric acid type clathrate hydrate, that is, a salt containing at least one of primary phosphate ion (H₂PO₄⁻), secondary phosphate ion (HPO₄²⁻) and tertiary phosphate ion (PO₄³⁻), the pH of the aqueous solution is adjusted before cooling, after cooling, before and after cooling, during cooling or in the course of cooling the aqueous solution, to thereby enable the production of a clathrate hydrate including, as the guest compound or guest compounds, a salt containing other phosphate ion(s) or its slurry.

According to the seventeenth embodiment of the present invention, a latent heat storage material can be attained which contains a phosphoric acid type clathrate hydrate having low metal corrosion and a latent heat storing capacity, wherein these characteristics are adjusted or arranged by a pH regulator.

According to the eighteenth embodiment of the present invention, a phosphoric acid type clathrate hydrate can be attained having low metal corrosion and a latent heat storing capacity, wherein these characteristics are adjusted or arranged according to the pH.

According to the nineteenth embodiment of the present invention, a slurry of the above phosphoric acid type clathrate hydrate can be obtained in which the phosphoric acid type clathrate hydrate is dispersed or suspended in an aqueous solvent. It is needless to say that this slurry is also one form of the latent heat storage material and may be expected to be used for a latent heat storage medium because it has high fluidity and is handled easily.

According to the twentieth embodiment of the present invention, a raw aqueous solution of a clathrate hydrate which is very economical, has low metal corrosivity and also possesses heat storing property can be attained.

When the pH of an aqueous solution having the property of producing a clathrate hydrate including, as the guest compound, a quaternary ammonium salt having a phosphate ion as the anion is changed, the latent heat storing characteristics (particularly, characteristics such as the melting point and heat storing density) of the clathrate hydrate produced from the an aqueous solution are changed. This is inferred that the clathrate hydrate produced from the aqueous solution and its content are changed.

Therefore, according to the twenty-first embodiment of the present invention, a pH regulator is added to the aqueous solution, and therefore, a raw aqueous solution can be attained which can produce clathrate hydrates different in latent heat storing characteristics or use and range of applications corresponding to the pH adjusted by addition of the pH regulator.

According to the twenty-second embodiment of the present invention, a clathrate hydrate can be attained which has low metal corrosivity, and is relatively inexpensive or economical and has heat storing property.

According to the twenty-third embodiment of the present invention, a slurry of a clathrate hydrate can be attained which has low metal corrosivity, and is relatively inexpensive and economical and has heat storing property.

A clathrate hydrate produced by cooling an aqueous solution having the property of producing a clathrate hydrate including, as the guest compound, a quaternary ammonium salt having a phosphate ion as the anion, has high dispersibility and less coagulating ability and is therefore easily dispersed or suspended in the aqueous solution.

Therefore, according to the twenty-fourth embodiment of the present invention, a clathrate hydrate slurry which has low metal corrosivity, is relatively inexpensive or economical and has heat storing property can be attained only by cooling the raw aqueous solution.

When the pH of the aqueous solution having the property of producing a clathrate hydrate including, as the guest compound, a quaternary ammonium salt having a phosphate ion as the anion is changed, the latent heat storing characteristics of the clathrate hydrate produced therefrom are changed.

Therefore, according to the twenty-fifth embodiment of the present invention, slurries of clathrate hydrates can be produced which differ in latent heat stroring characteristics or use and range of applications corresponding to the pH adjusted by adjusting the pH of the raw aqueous solution before cooing the raw aqueous solution.

According to the twenty-sixth embodiment of the present invention, a latent heat storage agent containing, as its component, a clathrate hydrate which is highly economical, has low metal corrosivity and has heat storing property can be attained.

According to the twenty-seventh embodiment of the present invention, a novel latent heat storage agent containing a clathrate hydrate including, as the guest compound, a quaternary ammonium salt having a phosphate ion as the anion and an inorganic phosphate or phosphoric acid can be attained. This latent heat storage agent is highly economical and has low metal corrosivity.

According to the twenty-eighth embodiment of the present invention, a pH regulator is added to the aqueous solution and therefore, a latent heat storage agent containing, as its structural component, each clathrate hydrate different in latent heat storing characteristics depending on the pH adjusted by addition of the pH regulator can be attained.

Because the inorganic phosphate and phosphoric acid each have a pH regulating function, the pH regulator in the second and ninth embodiments may be defined as those including an inorganic phosphate and phosphoric acid.

According to the twenty-ninth embodiment of the present invention, the aqueous solution having the property of producing a clathrate hydrate including, as the guest compound, a quaternary ammonium salt having a phosphate ion as the anion is cooled after its pH is adjusted, and therefore, the latent heat storing characteristics of the clathrate hydrate or its slurry can be adjusted or arranged according to the adjusted pH.

According to the thirtieth embodiment of the present invention, the aqueous solution having the property of producing a clathrate hydrate including, as the guest compound, a quaternary ammonium salt having a phosphate ion as the anion is cooled after its pH is adjusted, and therefore, the melting point of the clathrate hydrate can be adjusted or arranged according to the adjusted pH.

### Brief Description of Drawings

FIG. 1 is a view showing the IR analysis spectrum of a powder obtained from an aqueous solution 1 shown in Example 1 of the present invention.
FIG. 2 is a view showing the IR analysis spectrum of a powder obtained from an aqueous solution 2 shown in Example 1 of the present invention.
FIG. 3 is a view showing the IR analysis spectrum of a powder obtained from an aqueous solution 3 shown in Example 1 of the present invention.
FIG. 4 is a view showing the IR analysis spectrum of a reagent used in Example 1 of the present invention.
FIG. 5 is a flowchart showing a method of producing primary tetra-n-butylammonium phosphate shown in Example 4 of the present invention.
FIG. 6 is a view showing the IR analysis spectrum of a powder synthesized from TBAB shown in Example 4 of the present invention.
FIG. 7 is a graph showing the results of thermal analysis of a base solution and each sample solution shown in Example 9 of the present invention.

### Best Mode for Carrying Out the Invention

1. A clathrate hydrate according to the present invention includes, as its guest compound or guest compounds, at least one salt of at least one of a primary phosphate ion (H₂PO₄⁻), a secondary phosphate ion (HPO₄²⁻) and a tertiary phosphate ion (PO₄³⁻) and a cation (written as "Z⁺" on the assumption that it functions as a monovalent cation, without an intention of limiting to one type of cation and also without an intention of limiting to one valence).
   Typical examples of the guest compound of the clathrate hydrate in the present invention include quaternary ammonium salts such as tetra-n-butylammonium salt, tetra-iso-pentylammonium salt, tri-n-butyl-n-pentylammonium salt and tri-n-butyl-iso-pentylammonium salt, tetra-iso-butylphosphonium salt and tri-iso-amylsulfonium salt. It is quite reasonable to regard the quaternary ammonium salts as preferable guest compounds in the present invention because the quaternary ammonium salts are established as the components used for surfactants, phase-to-phase moving catalysts and the likes, so that they are distributed and are hence easily available.
   When the guest compounds corresponding to the above three types of phosphate ions are written as chemical formulae as follows:

   ZH₂PO₄

   Z₂HPO₄

   Z₃PO₄

   Also, when a total of three types of clathrate hydrates (hereinafter referred to as "basic hydrate" or "basic hydrates") produced by including each of the above guest compounds (X) in a cage-like structure formed by water molecules are written as W(X), they are expressed as follows:

   W(ZH₂PO₄)

   W(Z₂HPO₄)

   W(Z₃PO₄)
2. It has been clarified that the above three types of basic hydrates, as will be explained in detail later, each have a peculiar melting point and heat storing characteristics and are different in metal corrosivity. Also, it has been clarified that each of the above three types of basic hydrates is changed reversibly to the other depending on the pH of the solution. Therefore, the reversibility of such changes ensures that clathrate hydrates different in the number of valences of the anion or the slurries thereof can be easily produced by setting the pH to proper value. Therefore, the melting point, heat storing characteristics or metal corrosivity of a clathrate hydrate including at least one of the above three types of basic hydrates or the slurry thereof can be also changed.
   Also, when a slurry of a clathrate hydrate is utilized as a latent heat storage medium for cooling and air-conditioning, as will be explained in the examples later, Z₃PO₄ has a larger usable stored latent heat quantity than Z₂HPO₄ and Z₂HPO₄ has a larger usable stored latent heat quantity than ZH₂PO₄ if the concentration of the guest molecule in the aqueous solution is the same. Accordingly, in order to utilize the latent heat of the slurry of the clathrate hydrate, it may be effective that the percentage of Z₃PO₄ is made higher than that of Z₂HPO₄ or the percentage of Z₂HPO₄ is made higher than that of ZH₂PO₄ by increasing the pH.
3. Next, explanations will be given as to examples.

### Example 1

### (Neutralization reaction between tetra-n-butylammonium hydroxide and phosphoric acid)

A neutralization reaction between tetra-n-butylammonium hydroxide and phosphoric acid was run to attempt a synthesis of a phosphate of tetra-n-butylammonium.

The phosphate of tetra-n-butylammonium includes three types, that is, tetra-n-butylammonium dihydrogen phosphate (TBA-H₂PO₄), di(tetra-n-butylammonium) hydrogen phosphate (TBA₂-HPO₄) and tri(tetra-n-butylammonium) phosphate (TBA₃-PO₄) depending on the types of phosphate ions to be bound with the tetra-n-butylammonium ion. In the present invention, a tetra-n-butylammonium ion is written as TBA.

The molar ratio of tetra-n-butylammonium hydroxide to phosphoric acid, both of which were raw materials, was adjusted to 1:1 in the case of producing TBA-H₂PO₄, 2:1 in the case of producing TBA₂-HPO₄ and 3:1 in the case of producing TBA₃-PO₄.

Also, the concentration of water was so adjusted that the amount of water was 30 moles to 1 mole of tetra-n-butylammonium in each aqueous solution.

The aqueous solutions each containing each of three types of tetra-n-butylammonium hydroxide and phosphoric acid, different in molar ratio of tetra-n-butylammonium hydroxide to phosphoric acid as mentioned above, were reacted each other to produce a phosphate or phosphates of tetra-n-butylammonium. The obtained aqueous solutions are referred to as those described below for the sake of explanation.
Aqueous solution 1: aqueous solution produced from the raw material in which the molar ratio of tetra-n-butylammonium hydroxide to phosphoric acid is 1:1.
Aqueous solution 2: aqueous solution produced from the raw material in which the molar ratio of tetra-n-butylammonium hydroxide to phosphoric acid is 2:1.
Aqueous solution 3: aqueous solution produced from the raw material in which the molar ratio of tetra-n-butylammonium hydroxide to phosphoric acid is 3:1.

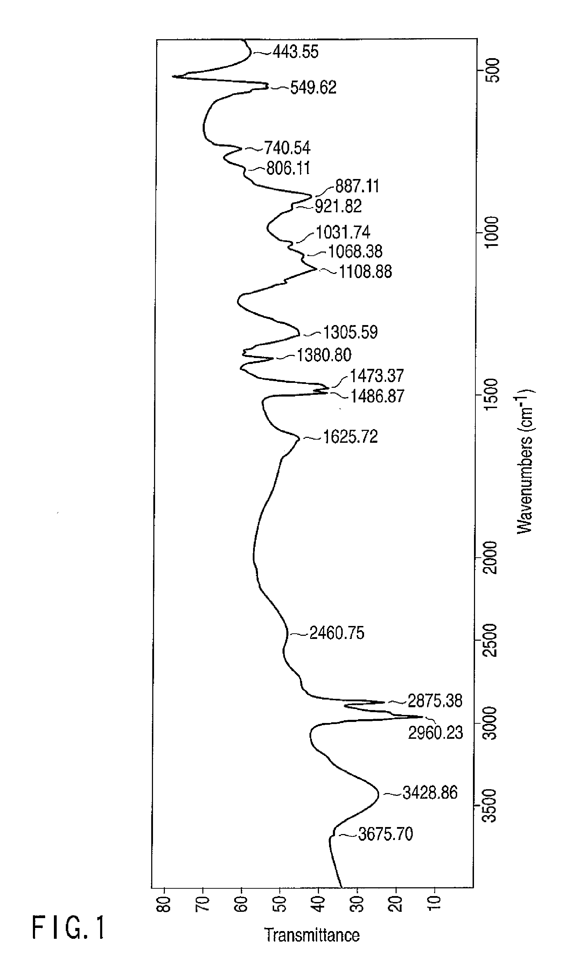

Water in the above three types of aqueous solutions was vaporized by drying under reduced pressure to analyze the obtained powder by IR. The obtained spectra are shown in FIGS. 1 to 3.
FIG. 1: Powder obtained from the aqueous solution 1.

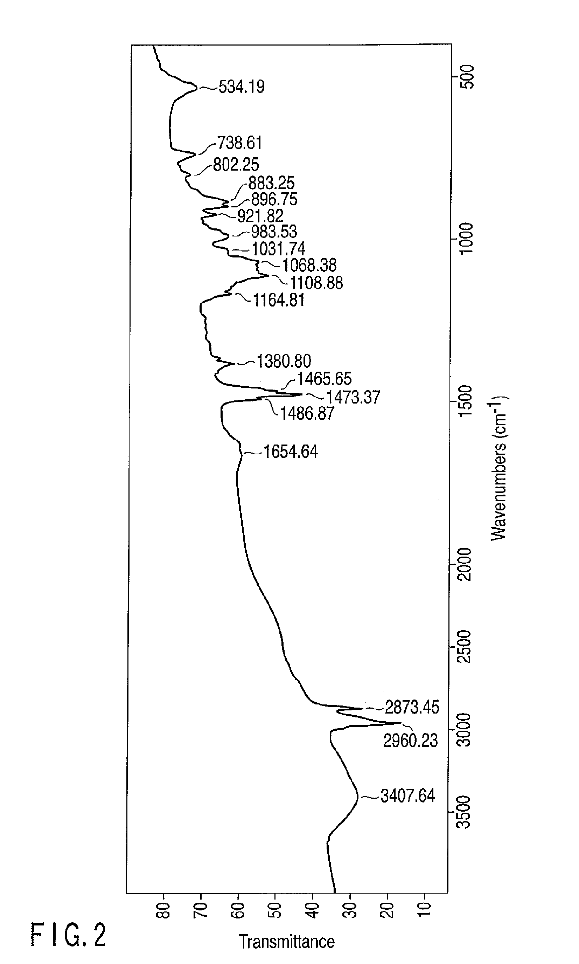

FIG. 2: Powder obtained from the aqueous solution 2.

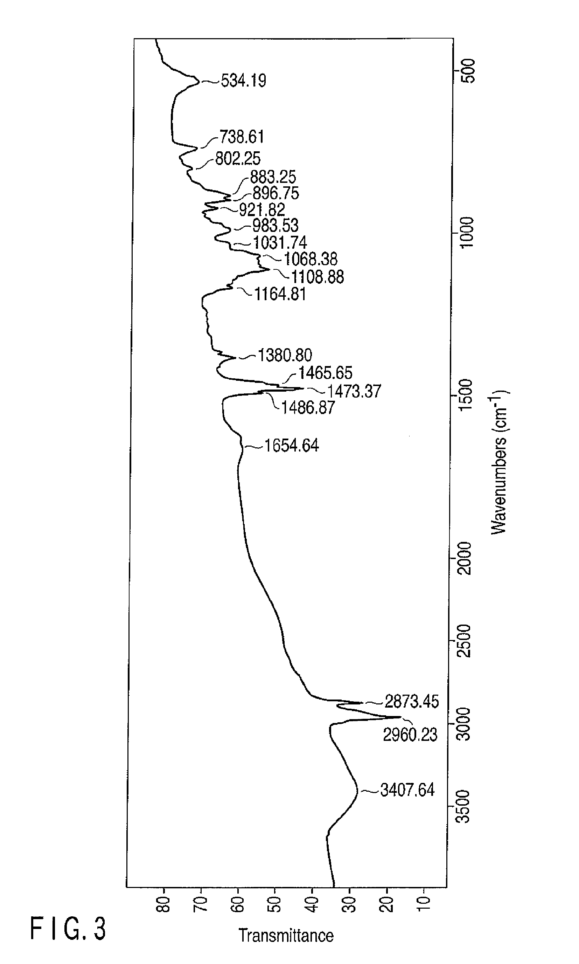

FIG. 3: Powder obtained from the aqueous solution 3.

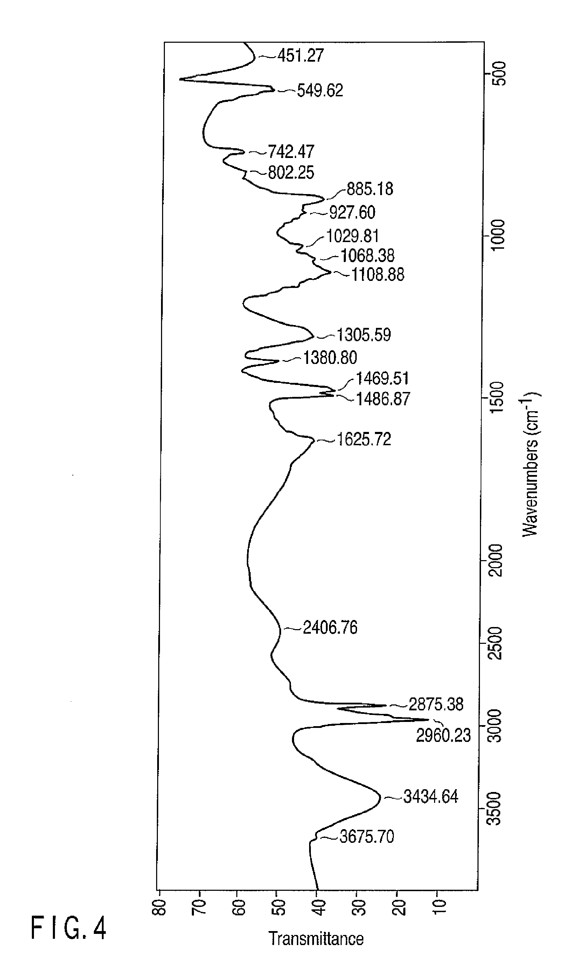

Also, TBA-H₂PO₄ (manufactured by Aldrich, purity: 97%) synthesized as a reagent was obtained on the market and was subjected to IR analysis. The results of obtained spectra are shown in FIG. 4. The results of this reagent almost accorded to the results of IR analysis (FIG. 1) of the powder obtained from the aqueous solution 1 obtained in this example, thereby confirming that TBA-H₂PO₄ was produced in the aqueous solution 1.

In the same procedures as above, it could be confirmed that the powder obtained from the aqueous solution 2 was TBA₂-HPO₄ and the powder obtained from the aqueous solution 2 was TBA₃-PO₄.

It has been confirmed that when the above three types of aqueous solutions are cooled, each hydrate is produced. Also, when each of the above three types of aqueous solutions was diluted 2.5 times with water and cooled with stirring, a slurry in which the hydrate was dispersed or suspended in the solution was obtained regardless of the type of aqueous solution.

The above three types of aqueous solutions were subjected to thermal analysis using a differential scanning calorimeter (DSC) to find the melting point and latent heat of each produced hydrate. (The analysis of DSC was made by cooling the aqueous solution to -30°C from ambient temperature to produce a hydrate and then, by heating the aqueous solution to 30°C to evaluate the melting point and the amount of latent heat of the hydrate).

The melting point was 6°C and the stored latent heat quantity was 41 kcal/kg in the case of TBA-H₂PO₄ of the aqueous solution 1, the melting point was 14°C and the stored latent heat quantity was 46 kcal/kg in the case of TBA₂-HPO₄ of the aqueous solution 2, and the melting point was 18°C and the stored latent heat quantity was 48 kcal/kg in the case of TBA₃-PO₄ of the aqueous solution 3.

The pHs of the above three types of aqueous solutions were different from each other depending on the ratio of the tetra-n-butylammonium hydroxide solution to phosphoric acid to be mixed.

The pH of the aqueous solution 1 (TBA-H₂PO₄) was 5, the pH of the aqueous solution 2 (TBA₂-HPO₄) was 10 and the pH of the aqueous solution 3 (TBA₃-PO₄) was 13.

It was found that three types of phosphates of tetra-n-butylammonium, that is, TBA-H₂PO₄, TBA₂-HPO₄ and TBA₃-PO₄ were produced at pHs different from each other, and also, their hydrates were produced at pHs different from each other.

It can be said that the hydrates represented by W(ZH₂PO₄), W(Z₂HPO₄) and W(Z₃PO₄) were produced at pHs different from each other.

### Example 2

### (Adjustment of the percentage of a hydrate of a tetra-n-butylammonium phosphate by pH adjustment)

The pH of the aqueous solution produced in Example 1 was changed by adding potassium hydroxide or phosphoric acid to examine the melting point by DSC and also to examine a variation in the hydrates of tetra-n-butylammonium phosphate by IR analysis.

### (1) Increase in each pH of the aqueous solutions 1 and 2

Though the aqueous solution 1 containing TBA-H₂PO₄ has a pH of 5, the pH was altered to 13 to prepare an aqueous solution 1A. Also, though the aqueous solution 2 containing TBA₂-HPO₄ has a pH of 10, the pH was altered to 13 to prepare an aqueous solution 2A. Each of the aqueous solutions 1A and 2A was subjected to DSC to measure the melting point of the hydrate, to find that it was 17°C. Each measured melting point almost corresponds to the melting point of a hydrate of TBA₂-PO₄.

Each of the aqueous solutions 1A and 2A was cooled with vigorous stirring to produce a hydrate, which was then separated from the liquid phase, and then, the hydrate was dissolved to obtain an aqueous solution, from which water was vaporized to obtain a powder. Each obtained powder was analyzed by IR to find that the IR spectrum was analogous to the IR spectrum of TBA₃-PO₄ obtained in Example 1.

It is found from the above facts that an aqueous solution having the property of producing a hydrate of TBA₃-PO₄ is produced by adjusting the aqueous solution 1 containing TBA-H₂PO₄ to pH 13 from pH 5 or the aqueous solution 2 containing TBA₂-HPO₄ to pH 13 from pH 10.

Moreover, when the pH of the aqueous solution 1A was returned to 5 from 13, it was found by DSC and IR analysis that a hydrate of TBA-H₂PO₄ was formed. Also, when the pH of the aqueous solution 2A was returned to 10 from 13, it was found by DSC and IR analysis that a hydrate of TBA₂-HPO₄ was formed.

### (2) Decrease in each pH of the aqueous solutions 2 and 3

Though the aqueous solution 2 containing TBA₂-HPO₄ has a pH of 10, the pH was changed to 5 to prepare an aqueous solution 2B. Also, though the aqueous solution 3 containing TBA₃-PO₄ has a pH of 13, the pH was changed to 5 to prepare an aqueous solution 3B. Each of the aqueous solutions 2B and 3B was subjected to DSC to measure the melting point of the hydrate, to find that it was 5°C. Each measured melting point almost corresponds to the melting point of a hydrate of TBA-H₂PO₄.

Each of the aqueous solutions 2B and 3B was cooled with vigorous stirring to produce a hydrate, which was then separated from the liquid phase, and then, the hydrate was dissolved to obtain an aqueous solution, from which water was vaporized to obtain a powder. Each obtained powder was analyzed by IR to find that the IR spectrum was analogous to the IR spectrum of TBA-H₂PO₄ obtained in Example 1.

It is found from the above facts that an aqueous solution having the property of producing a hydrate of TBA-H₂PO₄ is produced by adjusting the aqueous solution 2 containing TBA₂-HPO₄ to pH 5 from pH 10 or the aqueous solution 3 containing TBA₃-PO₄ to pH 5 from pH 13.

Moreover, when the pH of the aqueous solution 2B was returned to 10 from 5, it was found by DSC and IR analysis that a hydrate of TBA₂-HPO₄ was formed. Also, when the pH of the aqueous solution 3B was returned to 13 from 5, it was found by DSC and IR analysis that a hydrate of TBA₃-PO₄ was formed.

When the aqueous solutions 1A, 2A, 2B and 3B obtained by the above pH adjustment were each diluted 2.5 times with water and cooled with stirring, a slurry containing the hydrate dispersed or suspended in the aqueous solution and having fluidity was obtained using any aqueous solution.

From the above facts, it is found that the type of tetra-n-butylammonium phosphate contained in the aqueous solution is reversibly changed and the type of hydrate to be produced is reversibly changed by changing the pH of the aqueous solution of tetra-n-butylammonium phosphate. (see the following formula)

From this fact, it has been clarified that the percentage of a specified type tetra-n-butylammonium phosphate can be raised or changed by adjusting the pH of the aqueous solution of tetra-n-butylammonium phosphate, and that the type of hydrate to be produced can be controlled or arranged by pH adjustment.

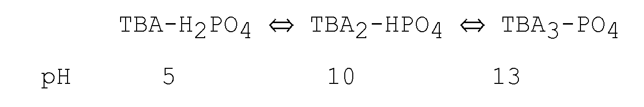

The influence of the pH of the aqueous solution on the production of a hydrate was studied more strictly. As a result, it was clarified that the produced hydrate contained W(ZH₂PO₄) as its major component when the pH of the aqueous solution was 7 or less. It was also clarified that the produced hydrate was almost W(ZH₂PO₄) when the pH of the aqueous solution was 5 or less.

It was clarified that the produced hydrate contained W(Z₂HPO₄) as its major component when the pH of the aqueous solution was in the range of 7 to 12. It was also clarified that the produced hydrate was almost W(Z₂HPO₄) when the pH of the aqueous solution was about 9.

It was clarified that the produced hydrate contained W(Z₃PO₄) as its major component when the pH of the aqueous solution was 12 or more. It was also clarified that the produced hydrate was almost W(Z₃PO₄) when the pH of the aqueous solution was about 13 or more.

With regard to the aqueous solution which had a pH of 7 or less and in which the produced hydrate contained W(ZH₂PO₄) as its major component, it was clarified that the major component of the produced hydrate was W(Z₂HPO₄) when the aqueous solution was adjusted to a pH ranging from 7 to 12 by adding an alkali material. Moreover, it was clarified that when the pH of the aqueous solution was adjusted to 12 or more by adding an alkali material, the major component of the produced hydrate was W(Z₃PO₄).

With regard to the aqueous solution which had a pH of 13 or more and in which the major component of the produced hydrate was W(Z₃PO₄) on the contrary, it was clarified that the major component of the produced hydrate was W(Z₂HPO₄) when the pH of the aqueous solution was changed by addition of an acidic material such that it was adjusted to a pH ranging from 7 to 12. It was also clarified that when the pH of the aqueous solution was more changed by addition of an acidic material such that the pH of the aqueous solution was adjusted to 7 or less, the major component of the produced hydrate was W(ZH₂PO₄).

Based on the findings concerning the pH dependency and reversibility of the change of the produced hydrate as mentioned above, clathrate hydrates different in the number of valences of the anion or its slurry can be easily produced by setting the pH of the solution to a proper value.

### Example 3

### (Corrosion test)

A powder of TBA-H₂PO₄ obtained from tetra-n-butylammonium hydroxide in Example 1 was dissolved in water such that the amount of water was adjusted to 30 moles with respect to 1 mole of tetra-n-butylammonium in the aqueous solution. The obtained solution was diluted 2.5 times with water to obtain an aqueous solution. Then, the solution was adjusted to pH 9.5 and pH 10.5 by adding sodium hydroxide.

A metal material was subjected to a corrosion test using the resulting aqueous solution. Test materials of copper, carbon steel and SUS304 were dipped in the aqueous solution and kept at 50°C under an open atmospheric pressure for one week.

As a result, almost no corrosion was observed on the surfaces of copper, carbon steel and SUS304 by the naked eyes in any case where the pHs of the solution were 9.5 and 10.5 respectively. Also, a reduction in weight was measured to detect the amount reduced by corrosion, thereby calculating the rate of corrosion. As a result, the calculated rate of corrosion was 0.01 mm/year or less in any of both cases, which means the corrosion was at such practically non-problematic level that no anti-corrosion treatment was necessary to be carried out.

### Example 4

### (Synthesis of TBA-H₂PO₄ from a halide of tetra-n-butylammonium)

Using tetra-n-butylammonium bromide which was a halide of tetra-n-butylammonium as starting material, a synthesis of tetra-n-butylammonium bihydrogen phosphate (TBA-H₂PO₄) among tetra-n-butylammonium phosphates was tried by the following steps (1) and (2).
(1) Tetra-n-butylammonium bromide was reacted with a hydroxide of an alkali metal in an organic solvent to produce a hydroxide of tetra-n-butylammonium and an alkali metal halide.
(2) After alkali metal halides were removed, the tetra-n-butylammonium hydroxide was reacted with phosphoric acid for neutralization in an organic solvent to produce a phosphate of tetra-n-butylammonium.

The molar ratio of the tetra-n-butylammonium hydroxide to phosphoric acid was set to 1:1 so as to produce tetra-n-butylammonium bihydrogen phosphate (TBA-H₂PO₄).

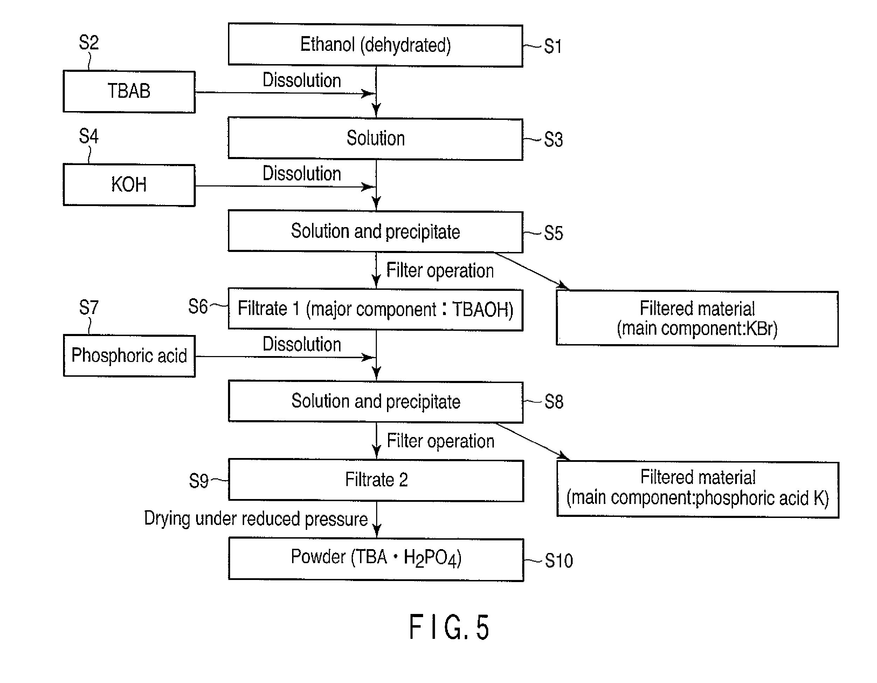

FIG. 5 is a flowchart showing a specific method of producing TBA-H₂PO₄. Hereinafter, the specific method of producing TBA-H₂PO₄ will be explained with reference to FIG. 5.

11 g of a dry molecular sieve was added to 550 g of ethanol used as an organic solvent, which was then stirred (S1) and 200 g of tetra-n-butylammonium bromide was dissolved in the mixture (S2) to form a solution (S3). 70 g of potassium hydroxide was further added to the solution (S4) to react at room temperature with stirring for 3 hours in an inert gas atmosphere. A precipitate was produced by the reaction (S5) and the precipitate was removed by filtration to obtain a filtrate (hereinafter referred to as "filtrate 1") containing the produced hydroxide of tetra-n-butylammonium (S6). The major component of the precipitate obtained by filtration was potassium bromide (S7).

144 g of 85% phosphoric acid was added to the filtrate 1 for producing TBA-H₂PO₄ such that the molar ratio of the hydroxide of tetra-n-butylammonium to phosphoric acid was 1:1 (S7) and the mixture was reacted at room temperature with stirring for 3 hours (S8).

The precipitate produced by the reaction was removed by filtration to obtain a filtrate (hereinafter referred to as "filtrate 2") containing the produced phosphate of tetra-n-butylammonium (S9).

The major component of the precipitate obtained by the filtration was a phosphate of potassium. This is because potassium hydroxide left in the filtrate 1 was reacted with phosphoric acid to form a phosphate of potassium, which was then separated as the precipitate.

The filtrate 2 was dried under reduced pressure at 50°C to remove an ethanol solvent, thereby obtaining 202 g of a powder (S10).

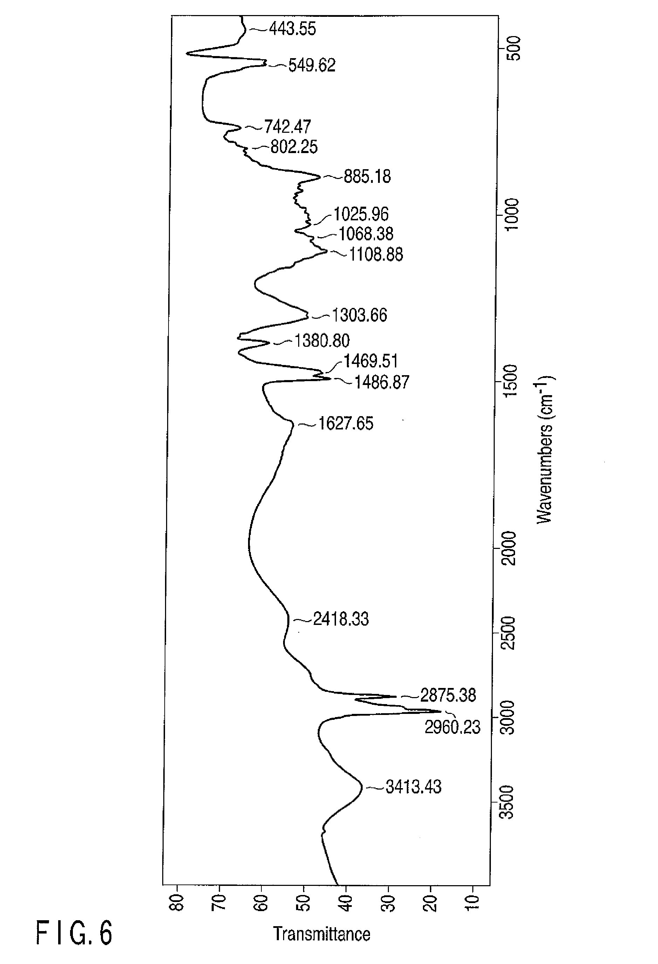

The results of IR analysis of this powder are shown in FIG. 6. The results of FIG. 6 are almost the same as those of FIGS. 1 and 4 to thereby confirm the formation of TBA-H₂PO₄. The yield of TBA-H₂PO₄ based on tetra-n-butylammonium was 90% or more.

The obtained TBA-H₂PO₄ was dissolved in water to obtain an aqueous solution by adjustment such that the amount of water was 30 moles based on 1 mole of tetra-n-butylammonium in the aqueous solution. The pH of the aqueous solution was 4.

Potassium hydroxide was added to the aqueous solution to adjust to pH 5 and to analyze by DSC, to find that the produced TBA-H₂PO₄ hydrate had a melting point of 6°C and the stored latent heat quantity of 41 kcal/kg.

The aqueous solution produced above was further diluted 2.5 times with water, which was cooled with stirring and as a result, a slurry having high fluidity and containing the hydrate suspended in the aqueous solution was obtained.

According to this Example 4, a phosphate of tetra-n-butylammonium (TBA-H₂PO₄) can be synthesized from inexpensive tetra-n-butylammonium bromide, showing that this method is therefore economical.

### Example 5

### (Production of TBA₂-HPO₄ or TBA₃-PO₄)

In Example 4, 144 g of 85% phosphoric acid was added in the filtrate 1 containing tetra-n-butylammonium hydroxide such that the molar ratio of tetra-n-butylammonium hydroxide to phosphoric acid was 1:1 to produce TBA-H₂PO₄.

In Example 5, the molar ratio of tetra-n-butylammonium hydroxide to phosphoric acid was made different from that of Example 4 in order to produce TBA₂-HPO₄ or TBA₃-PO₄.

### <Production of TBA₂-HPO₄>

After the filtrate 1 was obtained in the same procedures as in Example 4, 72 g of 85% phosphoric acid was added to produce TBA₂-HPO₄, such that the molar ratio of tetra-n-butylammonium hydroxide to phosphoric acid was 2:1.

A filtrate 2 was obtained in the same procedures as in Example 4.

Though the filtrate 2 was dried at 50°C under reduced pressure, a powder was not obtained but a paste material was obtained. When this paste material was analyzed, the production of a hydrate of TBA₂-HPO₄ was confirmed by measuring the DSC of the aqueous solution containing residual solvent ethanol.

### <Production of TBA₃-PO₄>

After the filtrate 1 was obtained in the same procedures as in Example 4, 48 g of 85% phosphoric acid was added to produce TBA₃-PO₄, such that the molar ratio of tetra-n-butylammonium hydroxide to phosphoric acid was 3:1.

A filtrate 2 was obtained in the same procedures as in Example 4.

Though the filtrate 2 was dried at 50°C under reduced pressure, a powder was not obtained, but a paste material was obtained. When this paste material was analyzed, the production of a hydrate of TBA₂-HPO₄ was confirmed by measuring the DSC of the aqueous solution containing residual solvent ethanol.

### Example 6

(Adjustment or arrangement of the percentage of a hydrate of tetra-n-butylammonium phosphate produced from tetra-n-butylammonium bromide by adjustment of pH)

TBA-H₂PO₄ obtained from tetra-n-butylammonium bromide obtained in Example 4 was dissolved in water to obtain an aqueous solution 4. The pH of the aqueous solution 4 was adjusted in the same manner as in the case of the aqueous solution 1 in Example 2 to examine a hydrate of tetra-n-butylammonium phosphate.

As a result, the same results as in Example 2 were obtained. It was found that with regard to tetra-n-butylammonium phosphate produced from tetra-n-butylammonium bromide, the type of tetra-n-butylammonium phosphate contained in the solution was reversibly changed and therefore, the type of hydrate to be produced was reversibly changed by changing the pH of the aqueous solution of tetra-n-butylammonium phosphate. It was also clarified that the percentage of a specified type of tetra-n-butylammonium phosphate was raised or changed by adjusting the pH of the aqueous solution of tetra-n-butylammonium phosphate, and that the type of hydrate to be produced could be controlled or arrangesd by adjusting the pH of the aqueous solution.

### Example 7

### (Corrosion test)

The powder of TBA-H₂PO₄ obtained from tetra-n-butylammonium bromide in Example 4 was dissolved in water to adjust the solution such that the amount of water was 30 moles based on 1 mole of tetra-n-butylammonium in the aqueous solution, which was then further diluted 2.5 times with water to obtain an aqueous solution.

Further, the pH of the aqueous solution was adjusted by addition of sodium hydroxide, and the obtained aqueous solution was used in a metal corrosion test. The results are shown collectively in Table 1. It was found that any of copper, carbon steel and SUS304 was hardly corroded in the solution of a pH ranging from about 6 to 11.

**Table 1**

| pH | Carbon steel | Copper | SUS304 |
|---|---|---|---|
| 5 | △ | ○ | ○ |
| 6 | ○ | ○ | ○ |
| 8 | ○ | ○ | ○ |
| 10 | ○ | ○ | ○ |
| 11 | ○ | ○ | ○ |
| 12 | ○ | △ | ○ |
| 13 | ○ | × | ○ |

| | | | |
|---|---|---|---|
| ○ : No corrosion was visually observed. The rate of corrosion was 0.01 mm/year or less. △ : Corrosion was partly observed visually. ×: Corrosion was clearly observed visually. | | | |

### Example 8

When the aqueous solution 1 containing TBA-H₂PO₄, the aqueous solution 2 containing TBA₂-HPO₄ and the aqueous solution 3 containing TBA₃-PO₄, all of which were obtained in Example 1, were respectively diluted 2.5 times with water and cooled with stirring, slurries having high fluidity and containing the hydrate dispersed or suspended in the aqueous solution were respectively obtained. Each clathrate hydrate slurry was cooled down to 6°C with stirring and then, allowed to stand for a time sufficient to put the slurry into an equilibrium state. Then, the slurry was heated by a heater to dissolve the hydrate slurry. The relation between the heat given at this time and the temperature was evaluated to calculate the heat energy storedd in the hydrate slurry, thereby determining the thermal density or heat storing density of the slurry.

The thermal density or heat storing density in a temperature ranging from 7 to 12°C was determined, because a heat storage element or heat transfer material preferable for cooling or air conditioning was used in this temperature range. The higher the thermal density in this temperature range, the more excellent the heat storing characteristics as a heat storage element or heat transfer material.

The thermal densities of hydrate slurries obtained from the aqueous solutions 1, 2 and 3 at a temperature ranging from 7 to 12°C were as follows. When the thermal density obtained in the case of the aqueous solution 3 (TBA₃-PO₄) was 100, the thermal density obtained in the case of the aqueous solution 2 (TBA₂-HPO₄) was 60 and the thermal density obtained in the case of the aqueous solution 1 (TBA-H₂PO₄) was 0. It was found from this fact that in order to efficiently utilize the latent heat of a slurry of a clathrate hydrate for the heat storage element or heat transfer material for cooling and air conditioning, it is preferable to use a hydrate slurry in which the percentage of TBA₂-HPO₄ hydrate or TBA₃-PO₄ hydrate is higher.

In Example 2, on the other hand, the aqueous solution 1 containing TBA-H₂PO₄ was adjusted to pH 13 from pH 5 and the aqueous solution 2 containing TBA₂-HPO₄ was adjusted to pH 13 from pH 10, which made it possible to produce an aqueous solution having the property of producing a hydrate of TBA₃-PO₄. It has been confirmed from the above results that the percentage of a specific type of tetra-n-butylammonium phosphate can be raised by adjusting the pH of the aqueous solution of tetra-n-butylammonium phosphate.

From the above fact, it is effective and efficient to adjust the aqueous solution so as to raise the pH, thereby making the percentage of TBA₂-HPO₄ higher than that of TBA-H₂PO₄ or making the percentage of TBA₃-PO₄ higher than that of TBA₂-HPO₄, when the slurry of a clathrate hydrate which is produced by cooling the aqueous solution of tetra-n-butylammonium phosphate is utilized for the heat storage element or heat transfer material for cooling and air conditioning.

Also, though the cation of the quaternary ammonium compound in the present invention may have any structure insofar as the quaternary ammonium compound has the property of producing a clathrate hydrate, typical examples of the cation include, but are not limited to, tetra-n-butylammonium, tetra-iso-amylammonium, tri-n-butyl-n-pentylammonium and tri-n-butyl-iso-pentylammonium.

Also, as to the inorganic phosphate, any type may be used without any problem insofar as it is dissolved in water and it does not provide significantly high metal corrosivity. Examples of the inorganic phosphate include, but are not limited to, phosphates of alkali metals and phosphates of NH₄⁺. Also, the inorganic phosphate may be any one or mixtures of two or more of salts containing primary phosphate ions, salts containing secondary phosphate ions and salts containing tertiary phosphate ions.

Typical examples of the phosphates of alkali metals include phosphates of sodium and phosphates of potassium and specific examples of the phosphates include potassium dihydrogenphosphate, potassium dihydrogenphosphate, tripotassium phosphate, sodium dihydrogen phosphate, disodium hydrogen phosphate and trisodium phosphate. Mixtures of these compounds may be used.

Also, phosphoric acid may be used in place of the inorganic phosphate. In other words, compounds which are dissolved in water to produce phosphate ions are used.

The latent heat accumulating material and its aqueous solution according to the present invention preferably have a pH ranging from 5 to 12. This is because if the pH is in this range, it is most preferable from the viewpoint of low corrosiveness to metals.

The types of latent heat accumulating material and inclusion hydrate and the heat accumulating property of the slurry are changed according to pH. The temperature zone of the production and melting of the inclusion hydrate (temperature zone where latent heat accumulation can be utilized) are higher with increase in pH and the temperature zone is lower as the pH is lowered. Therefore, it is preferable to use the inclusion hydrate by adjusting the pH according to use.

When, particularly, the inclusion hydrate is used in the form of a slurry, it is preferably adjusted to as high pH as possible within the pH range where low corrosiveness is developed. This measure is taken because the amount of the quaternary ammonium salt required to obtain the same heat accumulating density can be reduced, which is economical.

Also, it is needless to say that the inorganic phosphate or phosphoric acid to be added has also the function of adjusting the above pH according to the case.

### Example 9

### (1) Preparation of an aqueous solution of tetra-n-butylammonium phosphate (preparation of a base solution)

An aqueous solution of tetra-n-butylammonium hydroxide and phosphoric acid were allowed to undergo a neutralization reaction to thereby prepare an aqueous solution of a phosphate of tetra-n-butylammonium (including three types, that is, TBA-H₂PO₄, TBA₂-HPO₄ and TBA₃-PO₄). tetra-n-butylammonium dihydrogen phosphate TBA-H₂PO₄
di(tetra-n-butylammonium) hydrogen phosphate TBA₂-HPO₄
tri(tetra-n-butylammonium) phosphate TBA₃-PO₄

In the case of TBA-H₂PO₄, the raw materials were adjusted such that the molar ratio of tetra-n-butylammonium hydroxide to phosphoric acid was 1:1.

Also, in the case of TBA₂-HPO₄, the raw materials were adjusted such that the molar ratio of tetra-n-butylammonium hydroxide to phosphoric acid was 2:1.

Also, in the case of TBA₃-PO₄, the raw materials were adjusted such that the molar ratio of tetra-n-butylammonium hydroxide to phosphoric acid was 3:1.

Also, the concentration of water was adjusted such that the amount of water was 30 moles based on 1 mole of tetra-n-butylammonium in each aqueous solution.

The pH of each aqueous solution to be produced was changed according to the mixing ratio of an aqueous solution of tetra-n-butylammonium hydroxide to phosphoric acid. In the case of TBA-H₂PO₄, the pH of the aqueous solution was 5. Also, in the case of TBA₂-HPO₄, the pH of the aqueous solution was 10. Moreover, in the case of TBA₃-PO₄, the pH of the aqueous solution was 13.

The aqueous solution of TBA-H₂PO₄ was diluted with water to obtain an aqueous solution containing 15.6 wt% of TBA-H₂PO₄. The aqueous solution was adjusted to pH 10.5 by further adding potassium hydroxide. This solution was a base solution 1.

### (2) Aqueous solution of tetra-n-butylammonium to which a phosphate is added (preparation of a sample solution)

Dipotassium hydrogenphosphate was added to the base solution 1 in several different concentrations and the solutions were respectively adjusted to pH 10.5 by adding a minute amount of potassium hydroxide. The compositions of the prepared sample solutions 1 to 5 and base solution 1 are shown in Table 2. When the concentration of dipotassium hydrogenphosphate to be added is increased, the concentration of TBA-H₂PO₄ is relatively lowered.

**Table 2**

| | TBA-H₂PO₄ (wt%) | K₂HPO₄ (wt%) |
|---|---|---|
| Base solution 1 | 15.6 | 0 |
| Sample solution 1 | 15.1 | 2.9 |
| Sample solution 2 | 14.7 | 5.7 |
| Sample solution 3 | 14.3 | 8.3 |
| Sample solution 4 | 13.8 | 11.5 |
| Sample solution 5 | 13.2 | 15.3 |

### (3) Thermal analysis using a differential scanning calorimeter (DSC)

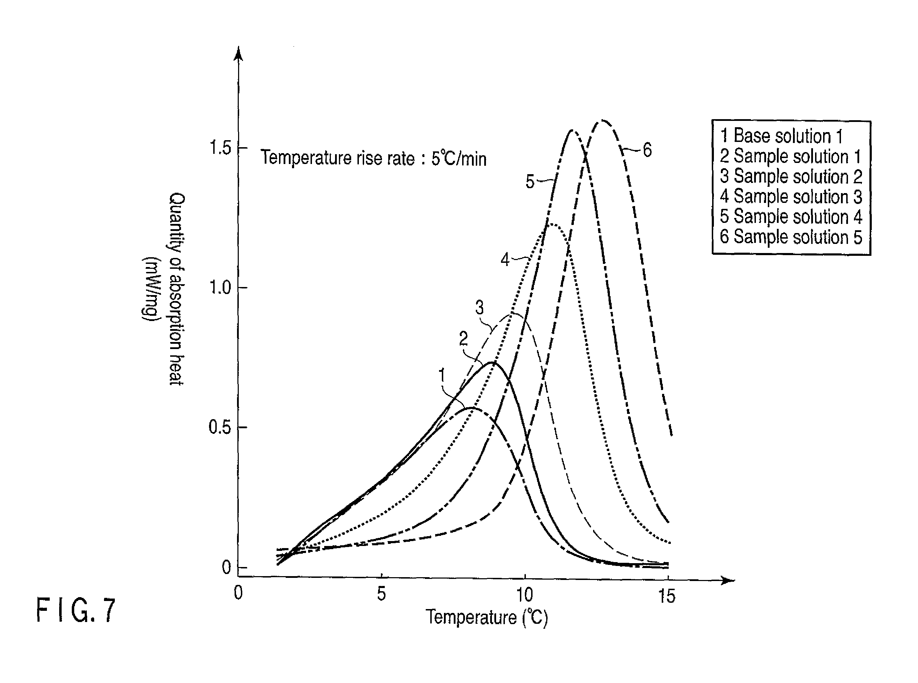

The base solution and each sample solution were cooled to produce a clathrate hydrate to analyze, by DSC, the relation between the temperature and the amount of heat absorption when the clathrate hydrate was dissolved under heating. The results are shown in FIG. 7. In FIG. 7, the abscissa is the temperature and the ordinate is the quantity of heat absorption.

The addition of dipotassium hydrogenphosphate increased the maximum value of a temperature-quantity of heat absorption curve (melting point). Then, it was clarified that as the concentration of dipotassium hydrogenphosphate to be added was increased, the melting point of the clathrate hydrate was increased, the quantity of dissolution heat was increased and the stored latent heat quantity was increased (see FIG. 7).

Also, each thermal density of the base solution and each sample solution was evaluated. In this case, because a heat storage element or heat transfer material preferable for cooling or air conditioning was used at a temperature ranging from 7 to 13°C, the thermal density at a temperature falling in this range was found. The results are shown in Table 3. As the thermal density in this temperature range is higher, the aqueous solution has more excellent heat storing characteristics as a heat storage element or heat transfer material for cooling and air conditioning.

**Table 3**

| | 7-13°C thermal density |
|---|---|
| Base solution 1 | 7 cal/g |
| Sample solution 1 | 10 cal/g |
| Sample solution 2 | 14 cal/g |
| Sample solution 3 | 17 cal/g |
| Sample solution 4 | 19 cal/g |
| Sample solution 5 | 16 cal/g |

As shown here, it was clarified that the thermal density was more increased than in the case of only TBA-H₂PO₄ by adding dipotassium hydrogenphosphate and that as the concentration of dipotassium hydrogenphosphate to be added was increased, the thermal density was increased. It was also clarified that when the concentration of dipotassium hydrogenphosphate to be added was made higher, the concentration of TBA-H₂PO₄ was relatively lower but the thermal density was improved or increased. It was found that when dipotassium hydrogenphosphate was added, the thermal density was nearly three times that obtained in the case of adding no dipotassium hydrogenphosphate, depending on the case.

From the above facts, if dipotassium hydrogenphosphate is added to an aqueous solution of TBA-H₂PO₄, the effective thermal density of the clathrate hydrate produced from the aqueous solution can be improved or increased even in the case of an aqueous solution containing TBA-H₂PO₄ in a lower concentration, or the same thermal density as that of the clathrate hydrate produced from an aqueous solution in which no dipotassium hydrogenphosphate was added and TBA-H₂PO₄ was contained in a higher concentration can be obtained. The amount of TBA-H₂PO₄ to be used can be thereby reduced and the material cost required to obtain the same thermal density can be outstandingly reduced because the cost of dipotassium hydrogenphosphate is a few several tenths of the cost of TBA-H₂PO₄.

### Example 10

### (Addition of phosphoric acid)

Phosphoric acid was added in place of dipotassium hydrogenphosphate added in Example 9 in an amount corresponding to the same moles as those of dipotassium hydrogenphosphate, and then, a sample adjusted to pH 10.5 by addition of potassium hydroxide was subjected to the same experiment, to find that the results of these samples are also the same as those of Example 9.

Specifically, it was clarified that as the concentration of phosphoric acid to be added was increased, the melting point of the clathrate hydrate was increased, the quantity of dissolution heat was increased and the stored latent heat quantity was increased.

Also, it was clarified that the thermal density was more increased by adding phosphoric acid than that obtained in the case of only TBA-H₂PO₄, and that as the concentration of phosphoric acid to be added was increased, the thermal density was increased. It was also found that when the concentration of phosphoric acid to be added was increased, the thermal density was improved or increased though the concentration of TBA-H₂PO₄ was relatively decreased.

From the above facts, if phosphoric acid is added to an aqueous solution of TBA-H₂PO₄, the effective thermal density of the clathrate hydrate produced from the solution can be improved or increased even in the case of an aqueous solution containing TBA-H₂PO₄ in a lower concentration, or the same thermal density as that of the clathrate hydrate produced from an aqueous solution in which no phosphoric acid was added and TBA-H₂PO₄ was contained in a higher concentration can be obtained. The amount of TBA-H₂PO₄ to be used can be thereby reduced and the material cost required to obtain the same thermal density can be outstandingly reduced because the cost of phosphoric acid is a few several tenths of the cost of TBA-H₂PO₄.

### Example 11

An aqueous solution of TBA₂-HPO₄ and an aqueous solution of TBA₃-PO₄ prepared by changing the molar ratio of the components in the raw materials were used as the base solutions in place of the aqueous solution of TBA-H₂PO₄ prepared as the base solutions 1 in Example 9 to examine a change in the latent heat storing characteristics as a function of each of dipotassium hydrogenphosphate and phosphoric acid to be added.

Although the aqueous solution of TBA₂-HPO₄ had a pH of 10, dipotassium hydrogenphosphates were added in several different concentrations in the same manner as in Example 9 and then, phosphoric acid was added as a pH regulator or pH modifier to obtain a sample adjusted to pH 5. When this sample was analyzed by DSC, it was clarified that as the concentration of dipotassium hydrogenphosphate to be added was increased, the melting point of the clathrate hydrate was increased, the quantity of dissolution heat was increased and the stored latent heat quantity was increased.

Also, it was clarified that the thermal density was more increased by adding dipotassium hydrogenphosphate than that obtained in the case of only TBA₂-HPO₄, and that as the concentration of dipotassium hydrogenphosphate to be added was increased, the thermal density was increased. It was also found that when the concentration of dipotassium hydrogenphosphate to be added was increased, the thermal density was improved or increased though the concentration of TBA₂-HPO₄ was relatively decreased.

The same results were obtained by addition of phosphoric acid.

From the above facts, if dipotassium hydrogenphosphate or phosphoric acid is added to an aqueous solution of TBA₂-HPO₄, the effective thermal density of the clathrate hydrate produced from the aqueous solution can be improved or increased even in the case of an aqueous solution containing TBA₂-HPO₄ in a lower concentration, or the same thermal density as that of the clathrate hydrate produced from an aqueous solution in which no dipotassium hydrogenphosphate was added and TBA₂-HPO₄ was contained in a higher concentration can be obtained. The amount of TBA₂-HPO₄ to be used can be thereby reduced and the material cost required to obtain the same thermal density can be outstandingly reduced.

Although the aqueous solution of TBA₃-PO₄ had a pH of 13, dipotassium hydrogenphosphates were added in several different concentrations in the same manner as in Example 9 and then, sulfuric acid was added as a pH regulator or pH modifier to obtain a sample adjusted to pH 10. When this sample was analyzed by DSC, it was clarified that as the concentration of dipotassium hydrogenphosphate to be added was increased, the melting point of the clathrate hydrate was increased, the quantity of dissolution heat was increased and the stored latent heat quantity was increased.

Also, it was clarified that the thermal density was more increased by adding dipotassium hydrogenphosphate than that obtained in the case of only TBA₃-PO₄, and that as the concentration of dipotassium hydrogenphosphate to be added was increased, the thermal density was increased. It was also found that when the concentration of dipotassium hydrogenphosphate to be added was increased, the thermal density was improved or increased though the concentration of TBA₃-PO₄ was relativelydecreased.

The same results were obtained by addition of phosphoric acid.

From the above facts, if dipotassium hydrogenphosphate or phosphoric acid is added to an aqueous solution of TBA₃-PO₄, the effective thermal density of the clathrate hydrate produced from the solution can be improved or increased even in the case of an aqueous solution containing TBA₃-PO₄ in a lower concentration, or the same thermal density as that of the clathrate hydrate produced from an aqueous solution in which no dipotassium hydrogenphosphate was added and TBA₃-PO₄ was contained in a higher concentration can be obtained. The amount of TBA₃-PO₄ to be used can be thereby reduced and the material cost required to obtain the same thermal density can be outstandingly reduced.

### Example 12

### (Adjustment or arrangement of the percentage of tetra-n-butylammonium phosphate by pH adjustment)

An aqueous solution of any one of three types of tetra-n-butylammonium phosphates prepared in Example 9(1) was adjusted such that the amount of water was 30 moles based on 1 mole of tetra-n-butylammonium. 2 to 15 wt% of dipotassium hydrogenphosphate was added to each aqueous solution (referred to as the following name, also showing its pH) and the pH of the solution was adjusted by adding a pH regulator or pH modifier to examine a variation in tetra-n-butylammonium phosphate by IR analysis. Potassium hydroxide or phosphoric acid was used as the pH regulator or pH modifier.
Aqueous solution 1 (TBA-H₂PO₄), pH 5
Aqueous solution 2 (TBA₂-HPO₄), pH 10
Aqueous solution 3 (TBA₃-PO₄), pH 13

### (1) Adjustment or arrangement made to increase the pH of each aqueous solution using the aqueous solutions 1 and 2 as the base solution

Though the aqueous solution 1 containing TBA-H₂PO₄ had a pH of 5, dipotassium hydrogenphosphate was added to the solution 1 and a pH regulator or pH modifier was further added to adjust the solution 1 to pH 13 to prepare an aqueous solution 1A.

Though the aqueous solution 2 containing TBA₂-HPO₄ had a pH of 10, dipotassium hydrogenphosphate was added to the solution 2 and a pH regulator or pH modifier was further added to adjust the solution 2 to pH 13 to prepare an aqueous solution 2A.

The aqueous solutions 1A and 2A were respectively cooled with vigorously stirring to produce a clathrate hydrate. The clathrate hydrate was then separated from the liquid phase and was dissolved to form an aqueous solution, from which water was vaporized to obtain a powder. The obtained powder was analyzed by IR, to find that its IR spectrum was analogous to the IR spectrum of TBA₃-PO₄.

It was found from these facts that, an aqueous solution having the property of producing a hydrate of TBA₃-PO₄ was produced, for example, by adjusting an aqueous solution obtained by adding dipotassium hydrogenphosphate to the aqueous solution 1 containing TBA-H₂PO₄ to pH 13 and by adjusting an aqueous solution obtained by adding dipotassium hydrogenphosphate to the aqueous solution 2 containing TBA₂-HPO₄ to pH 13.

Furthermore, the pH of the aqueous solution 1A was returned to 5 from 13 and the same procedures as above were carried out to obtain a powder, which was then analyzed by IR, to find that an aqueous solution having the property of producing a clathrate hydrate of TBA-H₂PO₄ was produced. Also, the pH of the aqueous solution 2A was returned to 10 from 13 and the same procedures as above were carried out to obtain a powder, which was then analyzed by IR, to find that an aqueous solution having the property of producing a clathrate hydrate of TBA₂-HPO₄ was produced.

### (2) Adjustment or arrangement made to decrease the pH of an aqueous solution using the aqueous solution 2 and the aqueous solution 3 as each base solution

Though the pH of the aqueous solution 2 containing TBA₂-HPO₄ was 10, dipotassium hydrogenphosphate was added and the aqueous solution 2 was adjusted to pH 5 by further adding a pH regulator or pH modifier to the aqueous solution 2 to prepare an aqueous solution 2B.

Though the pH of the aqueous solution 3 containing TBA₃-PO₄ was 13, dipotassium hydrogenphosphate was added and the aqueous solution 3 was adjusted to pH 5 by further adding a pH regulator or pH modifier to the aqueous solution 3 to prepare an aqueous solution 3B.

The aqueous solutions 2B and 3B were respectively cooled with vigorously stirring to produce a clathrate hydrate. The clathrate hydrate was then separated from the liquid phase and was dissolved to form an aqueous solution, from which water was vaporized to obtain a powder. The obtained powder was analyzed by IR, to find that its IR spectrum was analogous to the IR spectrum of TBA-H₂PO₄.

It was found from these facts that, an aqueous solution having the property of producing a hydrate of TBA₂-HPO₄ was produced, for example, by adjusting an aqueous solution obtained by adding dipotassium hydrogenphosphate to the aqueous solution 2 containing TBA₂-HPO₄ to pH 5 and by adjusting an aqueous solution obtained by adding dipotassium hydrogenphosphate to the aqueous solution 3 containing TBA₃-PO₄ to pH 5.

Furthermore, the pH of the aqueous solution 2B was returned to 10 from 5 and the same procedures as above were carried out to obtain a powder, which was then analyzed by IR, to find that an aqueous solution having the property of producing a clathrate hydrate of TBA₂-HPO₄ was produced. Also, the pH of the aqueous solution 3B was returned to 13 from 5 and the same procedures as above were carried out to obtain a powder, which was then analyzed by IR, to find that an aqueous solution having the property of producing a clathrate hydrate of TBA₃-PO₄ was produced.

The aqueous solutions 1A, 2A, 2B and 3B obtained by the above pH adjustment were respectively diluted 2.5 times with water and cooled with stirring and as a result, a clathrate hydrate slurry containing the clathrate hydrate dispersed or suspended in an aqueous solution was obtained from any of these aqueous solutions.

From the above facts, it is found that the type of tetra-n-butylammonium phosphate contained in the aqueous solution is reversibly changed and the type of clathrate hydrate to be produced is reversibly changed by adjusting the pH of the aqueous solution which contains tetra-n-butylammonium phosphate and is formulated with dipotassium hydrogenphosphate. (see the following formula)

From this, it has been clarified that the percentage of a specific type of tetra-n-butylammonium phosphate can be increased or changed by adjusting the pH of the aqueous solution which contains tetra-n-butylammonium phosphate and is formulated with dipotassium hydrogenphosphate, that the type of clathrate hydrate to be produced can be controlled or arranged by adjusting the pH of the aqueous solution and that clathrate hydrate slurries different in latent heat storinge characteristics, or in use and in the range of applications can be produced.

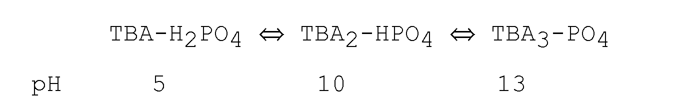

### Example 13

### <Corrosion test>

Using a sample solution obtained by adding dipotassium hydrogenphosphate to the aqueous TBA-H₂PO₄ solution prepared in Example 9(2) and a sample solution obtained by adding phosphoric acid to the aqueous TBA-H₂PO₄ solution prepared in Example 2 respectively, a corrosion test of a metal material was carried out. Copper, carbon steel and stainless steel SUS304 were each dipped in the sample solutions and kept at 50°C under atmospheric pressure for one week. As a result, almost no corrosion of copper, carbon steel and stainless steel SUS304 was observed by the naked eyes.

Also, the amount reduced by corrosion was determined by measuring a reduction in weight. However, the rate of corrosion was 0.01 mm/year or less in any of the above cases, which means the corrosion was at such practically non-problematic level that no anti-corrosion treatment was necessary to be carried out.

### Example 14

### <Corrosion test>

With regard to an aqueous solution prepared by adding dipotassium hydrogenphosphate or phosphoric acid to the aqueous TBA-H₂PO₄ solution (pH 5) prepared in Example 9(1) and by adjusting to pH ranging from 5 to 13 by further adding potassium hydroxide, the corrosion test of a metal material was carried out in the same manner as in Example 5. The results are shown in Table 4. Almost no corrosion of copper, carbon steel and stainless steel SUS304 was observed in a pH ranging from 6 to 11 by the naked eyes. Also, the amount reduced by corrosion was determined by measuring a reduction in weight. However, the rate of corrosion was 0.01 mm/year or less in any of the above cases, which means the corrosion was at such practically non-problematic level that no anti-corrosion treatment was necessary to be carried out. a

**Table 4**

| pH | Carbon steel | Copper | SUS304 |
|---|---|---|---|
| 5 | △ | ○ | ○ |
| 6 | ○ | ○ | ○ |
| 8 | ○ | ○ | ○ |
| 10 | ○ | ○ | ○ |
| 11 | ○ | ○ | ○ |
| 12 | ○ | △ | ○ |
| 13 | ○ | × | ○ |

| | | | |
|---|---|---|---|
| ○ : No corrosion was visually observed. The rate of corrosion was 0.01 mm/year or less. △ : Corrosion was partly observed visually. ×: Corrosion was clearly observed visually. Related matters | | | |

A. The present invention is not intended only for a clathrate hydrate including, as its guest compound, a salt of at least one of a primary phosphate ion, a secondary phosphate ion and a tertiary phosphate ion and a cation, or only for a clathrate hydrate including, as its guest compound, a salt of at least one of a primary phosphate ion, a secondary phosphate ion and a tertiary phosphate ion and a cation at a specified pH.
   The present invention is intended not only for a clathrate hydrate including, as its guest compound, a salt of at least one of a primary phosphate ion, a secondary phosphate ion and a tertiary phosphate ion and a cation, and a clathrate hydrate including, as its guest compound, a salt of at least one of a primary phosphate ion, a secondary phosphate ion and a tertiary phosphate ion and a cation at a specified pH, but also for a clathrate hydrate including, as its guest compound or guest compounds, salts containing two or more of these three types of anions (for example, two or more of the above three types of clathrate hydrates coexist at a percentage corresponding to the pH).
B. The pHs of the latent heat storage material and aqueous solution are respectively preferably in the range of 5 to 12. This is because this range is most preferable from the viewpoint of less corrosivity to metals.
   Also, the heat storing properties of the latent heat storage material, clathrate hydrate and slurry are changed by the pH, while the higher the pH, the higher the temperature zone of production and dissolution of the clathrate hydrate (temperature zone where latent heat accumulation can be utilized), whereas the lower the pH, the lower the temperature zone of the dissolution. Therefore, it is preferable to adjust the pH corresponding to use.
   Particularly, when the clathrate hydrate is used in the form of a slurry, it is preferably used at as high pH as possible within the pH range where low corrosiveness is developed. This is because the amount of a quaternary ammonium salt required to obtain the same heat storing density can be reduced, which is economical.
C. It is needless to say that an inorganic phosphate or phosphoric acid to be added in advance to the aqueous solution containing the guest compound of a clathrate hydrate in order to relatively improve the effective thermal density of a clathrate hydrate, its slurry or a latent heat storage material containing the clathrate hydrate has the function of adjusting the above pH according the case.

## Claims

1. A latent heat storage material which comprises:
a clathrate hydrate including, as its guest compound or guest compounds, at least one salt containing at least one of primary phosphate ion (H₂PO₄⁻), secondary phosphate ion (HPO₄²⁻) and tertiary phosphate ion (PO₄³⁻) -; and
a pH regulator.

2. An aqueous solution **characterized by** comprising a guest compound or guest compounds of a clathrate hydrate and a pH regulator, wherein the guest compound or guest compounds are at least one salt containing at least one of primary phosphate ion (H₂PO₄⁻), secondary phosphate ion (HPO₄²⁻) and tertiary phosphate ion (PO₄³⁻).

3. A clathrate hydrate produced by cooling an aqueous solution prepared by dissolving at least one salt containing at least one of primary phosphate ion (H₂PO₄⁻), secondary phosphate ion (HPO₄²⁻) and tertiary phosphate ion (PO₄³⁻), and a pH regulator in water, the produced clathrate hydrate storing latent heat.

4. A clathrate hydrate slurry **characterized by** comprising the clathrate hydrate according to claim 3 dispersed or suspended in an aqueous solvent.

5. A method for adjusting a melting point of a clathrate hydrate including, as its guest compound or guest compounds, at least one salt containing at least one of primary phosphate ion (H₂PO₄⁻), secondary phosphate ion (HPO₄²⁻) and tertiary phosphate ion (PO₄³⁻), the method **characterized by** comprising any one of (1) to (4):
(1) adjusting a pH of an aqueous solution prepared by dissolving the salt and then, cooling the aqueous solution;
(2) cooling an aqueous solution prepared by dissolving the salt and then, adjusting a pH of the aqueous solution;
(3) adjusting a pH of an aqueous solution prepared by dissolving the salt, and then, by cooling the aqueous solution, further adjusting the pH of the aqueous solution; and
(4) adjusting a pH of an aqueous solution prepared by dissolving the salt during cooling the aqueous solution.

6. A method for increasing stored latent heat quantity of a slurry of a clathrate hydrate including, as its guest compound or guest compounds, at least one salt containing primary phosphate ion (H₂PO₄⁻), the method **characterized by** comprising any one of (1) to (4) :
(1) increasing a pH of an aqueous solution prepared by dissolving the salt and then, cooling the aqueous solution;
(2) cooling an aqueous solution prepared by dissolving the salt and then, increasing a pH of the aqueous solution;
(3) increasing a pH of an aqueous solution prepared by dissolving the salt, and then, by cooling the aqueous solution, further adjusting the pH of the aqueous solution; and
(4) increasing a pH of an aqueous solution prepared by dissolving the salt during cooling the aqueous solution.

7. A method for producing a clathrate hydrate including, as its guest compound or guest compounds, at least one salt containing primary phosphate ion (H₂PO₄⁻) or a slurry containing the clathrate hydrate, the method **characterized by** comprising any one of (1) to (4):
(1) decreasing a pH of an aqueous solution of at least one salt containing at least one of secondary phosphate ion (HPO₄²⁻) and tertiary phosphate ion (PO₄³⁻) and then, decreasing a temperature of the aqueous solution to a temperature lower than a melting point of the clathrate hydrate;
(2) decreasing a temperature of an aqueous solution of at least one salt containing at least one of secondary phosphate ion (HPO₄²⁻) and tertiary phosphate ion (PO₄³⁻) to a temperature lower than a melting point of the clathrate hydrate and then, decreasing a pH of the aqueous solution;
(3) decreasing a pH of an aqueous solution of at least one salt containing at least one of secondary phosphate ion (HPO₄²⁻) and tertiary phosphate ion (PO₄³⁻), then, decreasing a temperature of the aqueous solution to a temperature lower than a melting point of the clathrate hydrate and then, decreasing the pH of the aqueous solution; and
(4) adjusting a pH of an aqueous solution of at least one salt containing at least one of secondary phosphate ion (HPO₄²⁻) and tertiary phosphate ion (PO₄³⁻) during cooling the aqueous solution to a temperature lower than a melting point of the clathrate hydrate.

8. A method for producing a clathrate hydrate including, as its guest compound or guest compounds, at least one salt containing at least one of secondary phosphate ion (HPO₄²⁻) or a slurry containing the clathrate hydrate, the method **characterized by** comprising any one of (1) to (4):
(1) decreasing a pH of an aqueous solution of at least one salt containing tertiary phosphate ion (PO₄³⁻) and then, decreasing a temperature of the aqueous solution to a temperature lower than a melting point of the clathrate hydrate;
(2) decreasing a temperature of an aqueous solution of a salt containing tertiary phosphate ion (PO₄³⁻) to a temperature lower than a melting point of the clathrate hydrate and then, decreasing a pH of the aqueous solution;
(3) decreasing a pH of an aqueous solution of a salt containing tertiary phosphate ion (PO₄³⁻), then, decreasing a temperature of the aqueous solution to a temperature lower than a melting point of the clathrate hydrate and then, further decreasing the pH of the aqueous solution; and
(4) decreasing a pH of an aqueous solution of a salt containing tertiary phosphate ion (PO₄³⁻) during cooling the aqueous solution to a temperature lower than a melting point of the clathrate hydrate.

9. A method for producing a clathrate hydrate including, as its guest compound or guest compounds, a salt containing secondary phosphate ion (HPO₄²⁻) or a slurry containing the clathrate hydrate, the method **characterized by** comprising any one of (1) to (4):
(1) increasing a pH of an aqueous solution of a salt containing primary phosphate ion (H₂PO₄⁻) and then, decreasing a temperature of the aqueous solution to a temperature lower than a melting point of the clathrate hydrate;
(2) decreasing a temperature of an aqueous solution of a salt containing primary phosphate ion (H₂PO₄⁻) to a temperature lower than a melting point of the clathrate hydrate and then, increasing a pH of the aqueous solution;
(3) increasing a pH of an aqueous solution of a salt containing primary phosphate ion (H₂PO₄⁻), then, decreasing a temperature of the aqueous solution to a temperature lower than a melting point of the clathrate hydrate and then, further increasing the pH of the aqueous solution; and
(4) increasing a pH of an aqueous solution of a salt containing primary phosphate ion (H₂PO₄³⁻) during cooling the aqueous solution to a temperature lower than a melting point of the clathrate hydrate.

10. A method for producing a clathrate hydrate including, as its guest compound or guest compounds, a salt containing tertiary phosphate ion (PO₄³⁻) or a slurry containing the clathrate hydrate, the method **characterized by** comprising any one of (1) to (4):
(1) increasing a pH of an aqueous solution of at least one salt containing at least one of secondary phosphate ion (HPO₄²⁻) and primary phosphate ion (H₂PO₄⁻) and then, decreasing a temperature of the aqueous solution to a temperature lower than a melting point of the clathrate hydrate;
(2) decreasing a temperature of an aqueous solution of at least one salt containing at least one of secondary phosphate ion (HPO₄²⁻) and primary phosphate ion (H₂PO₄⁻) to a temperature lower than a melting point of the clathrate hydrate and then, increasing a pH of the aqueous solution;
(3) increasing a pH of an aqueous solution of at least one salt containing at least one of secondary phosphate ion (HPO₄²⁻) and primary phosphate ion (H₂PO₄⁻), then, decreasing a temperature of the aqueous solution to a temperature lower than a melting point of the clathrate hydrate and then, further increasing the pH of the aqueous solution; and
(4) increasing a pH of an aqueous solution of at least one salt containing at least one of secondary phosphate ion (HPO₄²⁻) and primary phosphate ion (H₂PO₄³⁻) during cooling the aqueous solution to a temperature lower than a melting point of the clathrate hydrate.

11. A latent heat storage material which comprises:
a clathrate hydrate including, as its guest compound or guest compounds, at least one salt of tetra-n-butylammonium and at least one of primary phosphate ion (H₂PO₄⁻), secondary phosphate ion (HPO₄²⁻) and tertiary phosphate ion (PO₄³⁻); and
a pH regulator.

12. A clathrate hydrate produced by cooling an aqueous solution prepared by dissolving at least one salt of tetra-n-butylammonium and at least one of a primary phosphate ion (H₂PO₄⁻), a secondary phosphate ion (HPO₄²⁻) and a tertiary phosphate ion (PO₄³⁻), and a pH regulator, the produced clathrate hydrate storing latent heat.

13. a clathrate hydrate slurry **characterized by** comprising the clathrate hydrate according to claim 12 dispersed or suspended in an aqueous solvent.

14. An aqueous solution having a property of producing a clathrate hydrate including, as its guest compound or guest compounds, at least one quaternary ammonium salt containing an anion consisting of a phosphoric ion, the aqueous solution including the quaternary ammonium salt and an inorganic phosphate or phosphoric acid.

15. The aqueous solution according to claim 14, **characterized in that** the aqueous solution further includes a pH regulator.

16. A clathrate hydrate produced by cooling the aqueous solution according to claim 13 or 14, **characterized in that** the produced clathrate hydrate stores thermal energy equivalent to latent heat.

17. A clathrate hydrate slurry **characterized by** comprising the clathrate hydrate according to claim 16 dispersed or suspended in an aqueous solvent.

18. A clathrate hydrate slurry **characterized by** comprising the clathrate hydrate according to claim 16 dispersed or suspended in the aqueous solvent according to claim 14 or 15.

19. A method of producing a clathrate hydrate slurry, **characterized by** comprising cooling the aqueous solution according to claim 14 after adjusting a pH of the aqueous solution.

20. A latent heat storage agent **characterized by** comprising the clathrate hydrate according to claim 16.

21. A latent heat storage agent **characterized by** comprising a clathrate hydrate including, as its guest compound or guest compounds, at least one quaternary ammonium salt in which anion is a phosphate ion, and an inorganic phosphate or phosphoric acid.

22. The latent heat storage agent according to claim 21, **characterized by** further comprising a pH regulator.
